# EUROPÄISCHE PATENTSCHRIFT

(11) **EP 3 843 939 B1**
(45) Veröffentlichungstag und Bekanntmachung des Hinweises auf die Patenterteilung: **08.03.2023**
(21) Anmeldenummer: 19762937.1
(22) Anmeldetag: 30.08.2019
(51) Int. Cl.: B23Q 7/14

(54) **TRANSPORTEINRICHTUNG ZUM AUFNEHMEN EINER ODER MEHRERER WERKZEUGMASCHINENZUBEHÖREINRICHTUNGEN AUFWEISENDEN MODULEINHEITEN UND ZUM TRANSPORTIEREN DER EINEN ODER MEHREREN AUFGENOMMENEN MODULEINHEITEN**
TRANSPORT DEVICE FOR RECEIVING ONE OR MORE MODULE UNITS HAVING MACHINE TOOL ACCESSORY DEVICES AND FOR TRANSPORTING THE ONE OR MORE RECEIVED MODULE UNITS
DISPOSITIF DE TRANSPORT DESTINÉ À PRENDRE EN CHARGE UNE OU PLUSIEURS UNITÉS MODULAIRES PRÉSENTANT DES DISPOSITIFS ACCESSOIRES DE MACHINE-OUTIL ET À TRANSPORTER LA OU LES UNITÉS MODULAIRES PRISES EN CHARGE

(30) Priorität: 30.08.2018 DE 102018214794; 18.01.2019 DE 102019200662
(43) Veröffentlichungstag der Anmeldung: 07.07.2021
(60) Teilanmeldung: 23152277.2
(73) Patentinhaber: DECKEL MAHO Pfronten GmbH, 87459 Pfronten (DE)
(72) Erfinder: Geißler, Alfred, 87459 Pfronten (DE); Trenkle, Michael, 87459 Pfronten (DE); Riedel, Sebastian, 87637 Eisenberg (DE)
(74) Vertreter: MERH-IP Matias Erny Reichl Hoffmann Patentanwälte PartG mbB
(86) Internationale Anmeldenummer: PCT/EP2019/073283
(87) Internationale Veröffentlichungsnummer: WO 2020/043915

(56) Entgegenhaltungen:
- EP-A1- 1 693 149
- EP-A1- 2 987 761
- EP-A2- 2 019 014
- DE-A1- 3 026 945
- DE-A1- 3 219 459
- DE-A1- 3 614 165
- DE-A1- 19 654 536
- JP-A- H01 257 543
- US-A1- 2016 214 225
- EGGE H: "FAHRERLOSE TRANSPORTSYSTEME - EINE LOESUNG FUER VIELE MATERIALFLUSSPROBLEME", ZWF ZEITSCHRIFT FUR WIRTSCHAFTLICHE FERTIGUNG UNDAUTOMATISIERUNG, CARL HANSER VERLAG. MUNCHEN, DE, Bd. 86, Nr. 10, 1. Oktober 1991 (1991-10-01), Seiten 517-520, XP000231030, ISSN: 0947-0085
- BREUER H J: "MONTAGE, HANDHABUNG, MATERIALFLUSSTECHNIK AUF DER HANNOVER MESSE INDUSTRIE '91", WERKSTATT UND BETRIEB, HANSER, MÜNCHEN, Bd. 124, Nr. 8, 1. August 1991 (1991-08-01), Seiten 635-639, XP000243306, ISSN: 0043-2792
- STIERLE H: "FAHRERLOSE TRANSPORTFAHRZEUGE OHNE LEITLINIEN - EINE NEUE DIMENSION IM MATERIALFLUSS", ZWF ZEITSCHRIFT FUR WIRTSCHAFTLICHE FERTIGUNG UNDAUTOMATISIERUNG, CARL HANSER VERLAG. MUNCHEN, DE, vol. 86, no. 12, 1 December 1991 (1991-12-01), pages 632-636, XP000258378, ISSN: 0947-0085

## Beschreibung

Die vorliegende Erfindung betrifft eine Transporteinrichtung zum Aufnehmen und zum Transportieren einer oder mehrerer Moduleinheiten. Des Weiteren betrifft die vorliegende Erfindung ein System mit der Transporteinrichtung und einer zentralen Steuereinrichtung.

### HINTERGRUND DER ERFINDUNG

Transportfahrzeuge zum Aufnehmen und Transportieren von Gütern innerhalb einer Werkhalle sind bekannt. Hierbei sind der Gabelstapler und der zum Teil motorisierte Hubwagen die bekanntesten Beispiele. Dabei ist es ein erklärtes Ziel bei solchen Zulieferungen durch entsprechende Fahrzeuge, den Automatisierungsgrad immer weiter zu erhöhen und bevorzugt die Zulieferungen mit den Produktionsprozessen zu synchronisieren.

Hierfür werden bevorzugt fahrerlose Transportsysteme, kurz FTS, eingesetzt, welche neben fahrerlosen Transportfahrzeugen, kurz FTF, auch festgelegte Plätze zum Aufnehmen oder Ablegen von Transportgut durch die Transportfahrzeuge aufweisen, gegebenenfalls auch spezifisch eingerichtete Plätze oder Haltepunkte, um zum Beispiel das Transportgut für den bevorstehenden Fertigungsprozess vorzubereiten.

In der JP H01257543 A ist hierzu beispielsweise ein fahrerloses Transportfahrzeug (FTF) mit einem darauf aufgenommenen Werkezugspeicher gezeigt, wobei das FTF zur Unterstützung einer Werkzeugmaschine bzw. zur Bereitstellung von Werkzeugen aus dem Werkzeugspeicher entlang einer Führungsvorrichtung zur Werkzeugmaschine verfahren werden kann.

Nachteilig erweisen sich hierbei jedoch FTS, bei denen die Transportfahrzeuge durch ein Schienensystem zu den jeweiligen Stationen geführt werden. Nicht nur, dass ein solches Schienensystem sehr aufwendig ist im Hinblick auf Fertigung, Aufbau sowie Ausrichtung der Schienen und Schienensegmente zueinander. Es ist auch immer nur für den einen konkreten Fall konzipiert und kann daher nicht kurzfristig auf Änderungen der Positionen der Plätze oder des Produktionsablaufes reagieren bzw. angepasst werden.

Derartige Systeme sind daher immens nachteilig im Hinblick auf Flexibilität.

Weiterhin bieten die derzeit bekannten FTS den Nachteil, dass die FTF in der Regel der Fälle nur mit einer Schnittstelle zum Aufnehmen von Transportgut oder entsprechenden technischen Vorrichtungen etc. ausgerüstet sind, so dass diese Fahrzeuge häufig lange Wege zurücklegen müssen, um eine Vielzahl an Behältern ihren entsprechenden Bestimmungsort zuzuführen bzw. um die entsprechenden technischen Vorrichtungen an ihren Einsatzort zu bringen.

### ZUSAMMENFASSUNG DER ERFINDUNG

Eine Aufgabe der vorliegenden Erfindung ist es daher, eine Transporteinrichtung zum Aufnehmen und Transportieren einer oder mehrerer Moduleinheiten mit Werkzeugmaschinenzubehöreinrichtungen bereitzustellen, mit der die obigen Probleme vermieden werden.

Des Weiteren ist es Aufgabe der vorliegenden Erfindung, ein System mit der Transporteinrichtung und einer zentralen Steuereinrichtung bereitzustellen.

Diese Aufgaben werden gelöst durch eine Transporteinrichtung nach Anspruch 1 und ein System nach Anspruch 7. Die abhängigen Ansprüche beziehen sich auf vorteilhafte Ausführungsbeispiele der erfindungsgemäßen Transporteinrichtung und des erfindungsgemäßen Systems.

Durch die erfindungsgemäße Transporteinrichtung können nun in besonders vorteilhafter Weise verschiedenste Fertigungsprozesse unterstützt werden, so dass ein reibungsloser und insbesondere effizienter Ablauf der einzelnen Bearbeitungsschritte erfolgen kann.

Insbesondere kann durch die Ausgestaltung der erfindungsgemäßen Transporteinrichtung eine individuelle und freie Positionierung der Transporteinrichtung vor der Werkzeugmaschine bzw. vor dem Arbeitsraum der Werkzeugmaschine vorteilhaft erfolgen, ohne dabei auf eine Art Schienensystem oder dergleichen angewiesen zu sein.

Insbesondere kann durch den Einsatz eines fahrerlosen Transportfahrzeugs vorteilhaft ermöglicht werden, den Automatisierungsgrad der gesamten Fertigung um ein Vielfaches zu steigern, da die Koordinierung und allgemein die Steuerung der fahrerlosen Transportfahrzeuge bzw. Transporteinrichtungen beispielsweise durch eine zentrale Rechner-/Steuereinrichtung übernommen werden kann, so dass hier ein Werker vorrangig eine überwachende Funktion einnehmen kann.

Zudem können durch die erfindungsgemäße Transporteinrichtung diverse Hilfsarbeiten an einer bestehenden Werkzeugmaschine verrichtet werden, um die Effizienz der Fertigung zu erhöhen.

Dabei ist insbesondere anzumerken, dass eine der erfindungsgemäßen Transporteinrichtungen sowohl eine einzelne Aufgabe durch eine Werkzeugmaschinenzubehöreinrichtung übernehmen kann, wie aber auch mehrere Aufgaben gleichzeitig durch Aufnahme mehrerer Werkzeugmaschinenzubehöreinrichtungen.

Weiterhin können die verschiedenen Werkzeugmaschinenzubehöreinrichtungen bzw. Moduleinheiten völlig frei miteinander kombiniert werden, je nachdem, welche Fertigungs- und/oder Hilfsarbeiten an der Werkzeugmaschine verrichtet werden müssen.

Hierdurch können Fertigungsprozesse immens flexibel und effizient gestaltet werden.

Die erfindungsgemäße Transporteinrichtung kann ferner dadurch vorteilhaft weitergebildet werden, dass die Transporteinrichtung mittels Verfahren auf der Grundfläche dazu eingerichtet ist, die eine oder mehreren Moduleinheiten innerhalb eines Bereiches vor und/oder neben dem Arbeitsraum der Werkzeugmaschine entlang den Bereich aufspannenden Raumrichtungen zu positionieren.

Weiterhin kann die erfindungsgemäße Transporteinrichtung dadurch vorteilhaft weitergebildet werden, dass eine oder mehrere Aufnahmevorrichtungen zum Aufnehmen jeweiliger Moduleinheiten.

Ferner kann die erfindungsgemäße Transporteinrichtung dadurch vorteilhaft weitergebildet werden, dass mindestens eine der einen oder mehreren Aufnahmevorrichtungen eine Zentriervorrichtung aufweist, die dazu eingerichtet ist, die jeweils aufgenommenen Moduleinheit gegenüber der Aufnahmevorrichtung auszurichten.

Hierdurch kann bereits eine Positionierungsungenauigkeit der Moduleinheit (oder einer anderen Einrichtung wie Handhabungseinrichtung, Palettenhalter, Materialboxen, etc.) gegenüber der Werkzeugmaschine oder einer anderen Einrichtung (wie Rüstplatz, Ablageplatz, Magazinplatz usw.) beim Absetzen/Andocken der Moduleinheit an der Werkzeugmaschine ausgeglichen werden. Durch die Zentriervorrichtung kann die Transporteinrichtung die relative Lage der aufgenommenen Moduleinheit gegenüber sich selbst korrigieren und so lediglich eine Positionierungenauigkeit der Moduleinheit gegenüber der Werkzeugmaschine erreichen, die im Wesentlichen nur noch auf die Positionierungenauigkeit der Transporteinrichtung zurückzuführen ist.

Die erfindungsgemäße Transporteinrichtung kann zudem vorteilhaft weitergebildet werden, durch: einen Antrieb zum Verfahren des Transportfahrzeugs, und eine Steuereinheit zum Steuern der Transporteinrichtung.

Weiterhin kann die erfindungsgemäße Transporteinrichtung dadurch vorteilhaft weitergebildet werden, dass die Transporteinrichtung dazu eingerichtet ist, zu einer zur Bereitstellung von Moduleinheiten und/oder Lagerung von Moduleinheiten eingerichteten Modulladestation zu verfahren, insbesondere zum Ausrüsten des fahrerlosen Transportfahrzeugs der Transporteinrichtung mit einer oder mehreren Moduleinheiten an der Modulladestation und/oder zum Austausch einer oder mehrerer Moduleinheiten der Transporteinrichtung an der Modulladestation.

Insbesondere kann die erfindungsgemäße Transporteinrichtung dadurch vorteilhaft weitergebildet werden, dass weitere Moduleinheiten der ein oder mehreren aufgenommenen Moduleinheiten der Transporteinrichtung jeweils als Werkzeugmaschinenzubehöreinrichtung Folgendes umfassen: eine Handhabungseinrichtung, die zur Handhabung einer Palette und/oder eines Werkstücks an der Werkzeugmaschine eingerichtet ist, oder ein Industrieroboter, insbesondere zur Handhabung von Werkzeugen, Werkstücken und/oder Werkstückpaletten, oder eine Werkzeugwechselvorrichtung zum Ausführen eines Werkzeugwechsels an der Werkzeugmaschine, eine Werkzeugspeichereinrichtung bzw. ein Werkzeugmagazin zum Bereitstellen von Werkzeugen an der Werkzeugmaschine, oder eine Werkzeugspeichereinrichtung mit Werkzeugwechselvorrichtung zum Bereitstellen von Werkzeugen an der Werkzeugmaschine und zum Ausführen eines Werkzeugwechsels an der Werkzeugmaschine, oder eine Werkstückwechselvorrichtung zum Ausführen eines Werkstückwechsels an der Werkzeugmaschine, eine Späneauffangeinrichtung zum Auffangen von Spänen an der Werkzeugmaschine bzw. in dem Arbeitsraum der Werkzeugmaschine, oder eine Spänefödereinrichtung zum Abführen von Spänen von der Werkzeugmaschine bzw. aus dem Arbeitsraum der Werkzeugmaschine, oder eine Werkstück-Zuladevorrichtung zum Laden von Werkstücken an der Werkzeugmaschine, insbesondere ein Stangenlader zum Einsatz an einer als Drehmaschine ausgebildeten Werkzeugmaschine , oder eine Werkstückvermessungseinrichtung zum Vermessen eines Werkstücks an der Werkzeugmaschine, insbesondere mit einer optischen, elektromagnetischen und/oder taktilen Messvorrichtung, oder eine Werkstückentgratvorrichtung zum Entgraten eines Werkstücks an der Werkzeugmaschine, oder eine Werkzeugeinrichtvorrichtung zum Einrichten von Werkzeugen an der Werkzeugmaschine, oder eine Werkzeugabrichtvorrichtung zum Abrichten von Werkzeugen an der Werkzeugmaschine, insbesondere zum Abrichten von Schleifwerkzeugen an der Werkzeugmaschine, oder eine Vorrichtung zum Werkzeugschärfen von Werkzeugen an der Werkzeugmaschine, oder eine Absaugvorrichtung zum Absaugen im Arbeitsraum der Werkzeugmaschine, eine Werkstückaufnahme zum Aufnehmen eines Werkstücks, oder eine Fördereinrichtung zum Fördern von Werkstücken, insbesondere umfassend ein oder mehrere Förderbänder bzw. Förderbandabschnitte, oder eine Ersatzteilaustauscheinrichtung zum Austausch von Zubehörteilen bzw. Ersatzteilen an der Werkzeugmaschine.

Weiterhin kann die erfindungsgemäße Transporteinrichtung dadurch vorteilhaft weitergebildet werden, dass weitere der einen oder mehreren aufgenommenen Moduleinheiten Folgendes umfassen: eine Handhabungsmoduleinheit mit einer Handhabungseinrichtung, die zur Handhabung einer Palette und/oder eines Werkstücks an der Werkzeugmaschine eingerichtet ist, oder eine Robotermoduleinheit mit einem Industrieroboter, insbesondere zur Handhabung von Werkzeugen, Werkstücken und/oder Werkstückpaletten, oder eine Werkzeugwechselmoduleinheit mit einer Werkzeugwechselvorrichtung zum Ausführen eines Werkzeugwechsels an der Werkzeugmaschine, oder eine Werkzeugspeichermoduleinheit mit einer Werkzeugspeichereinrichtung bzw. ein Werkzeugmagazin zum Bereitstellen von Werkzeugen an der Werkzeugmaschine, oder eine Werkzeugspeicher- und Werkzeugwechselmoduleinheit mit einer Werkzeugspeichereinrichtung mit Werkzeugwechselvorrichtung zum Bereitstellen von Werkzeugen an der Werkzeugmaschine und zum Ausführen eines Werkzeugwechsels an der Werkzeugmaschine, oder eine Werkstückwechselmoduleinheit mit einer Werkstückwechselvorrichtung zum Ausführen eines Werkstückwechsels an der Werkzeugmaschine, oder eine Späneauffangmoduleinheit mit einer Späneauffangeinrichtung zum Auffangen von Spänen an der Werkzeugmaschine bzw. in dem Arbeitsraum der Werkzeugmaschine, oder eine Spänefördermoduleinheit mit einer Spänefödereinrichtung zum Abführen von Spänen von der Werkzeugmaschine bzw. aus dem Arbeitsraum der Werkzeugmaschine, oder eine Werkstückzulademoduleinheit mit einer Werkstück-Zuladevorrichtung zum Laden von Werkstücken an der Werkzeugmaschine, insbesondere ein Stangenlader zum Einsatz an einer als Drehmaschine ausgebildeten Werkzeugmaschine, oder eine Werkstückvermessmoduleinheit mit einer Werkstückvermessungseinrichtung zum Vermessen eines Werkstücks an der Werkzeugmaschine, insbesondere mit einer optischen, elektromagnetischen und/oder taktilen Messvorrichtung, oder eine Werkstückentgratmoduleinheit mit einer Werkstückentgratvorrichtung zum Entgraten eines Werkstücks an der Werkzeugmaschine, oder eine Werkzeugeinrichtmoduleinheit mit einer Werkzeugeinrichtvorrichtung zum Einrichten von Werkzeugen an der Werkzeugmaschine, oder eine Werkzeugabrichtmoduleinheit mit einer Werkzeugabrichtvorrichtung zum Abrichten von Werkzeugen an der Werkzeugmaschine, insbesondere zum Abrichten von Schleifwerkzeugen an der Werkzeugmaschine, oder eine Werkzeugschärfmoduleinheit mit einer Vorrichtung zum Werkzeugschärfen von Werkzeugen an der Werkzeugmaschine, oder eine Absaugmoduleinheit mit einer Absaugvorrichtung zum Absaugen im Arbeitsraum der Werkzeugmaschine, oder eine Werkstückaufnahmemoduleinheit mit einer Werkstückaufnahme zum Aufnehmen eines Werkstücks, oder eine Fördermoduleinheit mit einer Fördereinrichtung zum Fördern von Werkstücken, insbesondere umfassend ein oder mehrere Förderbänder bzw. Förderbandabschnitte, oder eine Ersatzteilaustauschmoduleinheit mit einer Ersatzteilaustauscheinrichtung zum Austausch von Zubehörteilen bzw. Ersatzteilen an der Werkzeugmaschine.

Das erfindungsgemäße System, mit einer oder mehreren erfindungsgemäßen Transporteinrichtungen, und eine zentrale Steuereinrichtung die dazu eingerichtet ist, mit der einen oder den mehreren Transporteinrichtungen in Verbindung zu stehen, insbesondere mittels einer drahtlosen Kommunikationsverbindung, und die mehreren Transporteinrichtungen zu steuern, insbesondere per automatischer Fernsteuerung.

Durch die erfindungsgemäße Transporteinrichtung kann der Produktions- und Bearbeitungsprozess von Werkstücken deutlich flexibler gestaltet werden. Zudem kann die erfindungsgemäße Transporteinrichtung sowohl bei bereits bestehenden Fertigungsstrukturen angewendet werden, als auch für völlig neue Abläufe bei der Fertigung und Bearbeitung von Werkstücken verwendet werden.

Zudem bietet die erfindungsgemäße Transporteinrichtung den deutlichen Vorteil, durch ihre flexiblen Einsatzmöglichkeiten auf keine Aufgaben innerhalb der Produktionskette / innerhalb des Produktionsprozesses beschränkt zu sein.

Zudem sollen im Folgenden Beispiele einer Transporteinrichtung ohne aufgenommene Kühlmittelaustausch-, Kühlmittelzuführ- oder Kühlmittelabsaugmoduleinheit beschrieben werden.

Eine beispielhafte Transporteinrichtung zum Transportieren einer Handhabungseinrichtung zur Handhabung einer Palette und/oder eines Werkstücks an eine Werkzeugmaschine zur spanenden Bearbeitung des Werkstücks, wobei die Werkzeugmaschine eine Arbeitsspindel zum Aufnehmen eines Werkzeugs oder des Werkstücks und eine Palette zum Aufnehmen des Werkzeugs oder des Werkstücks aufweist, ist ferner dazu eingerichtet, die Handhabungseinrichtung innerhalb eines Bereiches vor einem Arbeitsraum der Werkzeugmaschine entlang der den Bereich aufspannenden Raumrichtungen zu positionieren.

Durch die beispielhafte Transporteinrichtung ist es nun möglich, gänzlich auf Schienensysteme zur Führung der Transportfahrzeuge zu verzichten, da die Transportfahrzeuge sich frei auf einer Ebene wie dem Hallenboden bewegen können.

Zusätzlich können hierdurch die Fahrzeuge und ihre "Fahrbahnen" individuell an die Gegebenheiten angepasst werden und ermöglichen so eine deutliche Steigerung der Flexibilität in Produktion und Logistik.

Weiterhin verfügt die beispielhafte Transporteinrichtung über eine Vielzahl an Schnittstellen, an diesen verschiedenste Handhabungseinrichtungen wie Palettenwechsler, Roboter, Behälter und Boxen etc. aufgenommen werden können, was dadurch weiterhin die Flexibilität im Produktionsprozess wie auch im Bereich der Logistik steigern kann.

Die beispielhafte Transporteinrichtung kann dadurch vorteilhaft weitergebildet werden, dass die Transporteinrichtung ferner ein fahrerloses Transportfahrzeug ist, mit einer Plattform, die mehrere Aufnahmevorrichtungen zum Aufnehmen von Handhabungseinrichtungen aufweist, einem Antrieb zum Bewegen der Plattform, und einer Steuereinheit zum Steuern der Aufnahmevorrichtungen und des Antriebs der Plattform.

Um den Automatisierungsgrad zu erhöhen, ist die beispielhafte Transporteinrichtung als fahrerloses Transportfahrzeug mit entsprechender Steuerung und Vernetzung ausgebildet, so dass auch mehrere Transportfahrzeuge / Transporteinrichtungen aufeinander abgestimmt bewegt werden können.

Die beispielhafte Transporteinrichtung kann dadurch vorteilhaft weitergebildet werden, dass an zumindest einer Seite der Transporteinrichtung mindestens eine Aufnahmevorrichtung vorgesehen ist, vorzugsweise an mindestens zwei Seiten der Transporteinrichtung mindestens eine Aufnahmevorrichtung vorgesehen ist, und besonders bevorzugt an jeder Seite der Transporteinrichtung mindestens eine Aufnahmevorrichtung vorgesehen ist.

Hierdurch können nun deutlich mehr technische Vorrichtungen und/oder Behälter zu ihrem jeweiligen Bestimmungsort mit nur einer Fahrt gebracht werden, als dies bei bisher bekannten Transportfahrzeugen möglich ist.

Die beispielhafte Transporteinrichtung kann dadurch vorteilhaft weitergebildet werden, dass die Plattform ferner einen internen Energiespeicher aufweist, der die Aufnahmevorrichtungen, den Antrieb und die Steuereinheit der Plattform mit Energie, insbesondere elektrischer Energie versorgt.

Dadurch kann sich die Transporteinrichtung frei durch Werkhallen und Produktions- bzw. Fertigungsbereiche bewegen, ohne dass dafür ein aufwändiges Führungssystem für Kabel zur Energie- und/oder Signalübertragung vorgesehen werden muss.

Die beispielhafte Transporteinrichtung kann dadurch vorteilhaft weitergebildet werden, dass die Steuereinheit ferner eine Sensoreinheit aufweist, die zur Überwachung der Umgebung der Transporteinrichtung optische, Infrarot- und/oder Radarsensoren umfasst.

Zur Überwachung der Umgebung und zur Detektion eventueller Hindernisse ist es vorteilhaft, derartige Sensoren an einem fahrerlosen Transportfahrzeug vorzusehen. Dies erhöht zusätzlich den Schutz der Werksarbeiter in der Halle.

Die beispielhafte Transporteinrichtung kann dadurch vorteilhaft weitergebildet werden, dass die Transporteinrichtung ferner dazu eingerichtet ist, die Handhabungseinrichtung nach der Positionierung an der Werkzeugmaschine abzusetzen.

Diese Möglichkeit ist dahingehend besonders vorteilhaft, da die Transporteinrichtung nicht mit der Handhabungseinrichtung an Ort und Stelle verbleiben muss, sondern weitere Handhabungseinrichtungen transportieren kann, während z.B. die abgesetzte Handhabungseinrichtung ihre Funktion an der jeweiligen Werkzeugmaschine ausführt.

Die beispielhafte Transporteinrichtung kann dadurch vorteilhaft weitergebildet werden, dass die Aufnahmevorrichtungen ferner Anschlusselemente aufweisen, die für eine Übertragung von Steuerungssignalen und/oder Energie von der Transporteinrichtung an die Handhabungseinrichtung eingerichtet sind.

Hierdurch können in vorteilhafter Weise Energie und Signale zur Steuerung der Handhabungseinrichtung von der Transporteinrichtung an die Handhabungseinrichtung übertragen werden. Dies ist insbesondere auch dadurch vorteilhaft, da die Transporteinrichtung mit einer zentralen Leitrechnersteuerung in Kontakt (per Funksignal, WLAN, etc.) stehen kann und hierdurch eine zentrale Steuerung aller Handhabungseinrichtungen, die zu dem Zeitpunkt von Transporteinrichtungen bewegt werden, stattfinden kann.

Die beispielhafte Transporteinrichtung kann dadurch vorteilhaft weitergebildet werden, dass die Anschlusselemente der Aufnahmevorrichtungen der Transporteinrichtung bei der Aufnahme der Handhabungseinrichtung eine Verbindung mit der Handhabungseinrichtung zur Übertragung von Steuerungssignalen und/oder Energie automatisch herstellen.

Hierdurch entfällt das händische Eingreifen eines Werkarbeiters und der Automatisierungsgrad der Produktions- und Logistikabläufe kann weiter gesteigert werden.

Die beispielhafte Transporteinrichtung kann dadurch vorteilhaft weitergebildet werden, dass die Aufnahmevorrichtungen jeweils eine Kontrollvorrichtung zum Überwachen des Zustands der Aufnahme der jeweiligen Handhabungseinrichtung aufweisen.

Die beispielhafte Transporteinrichtung kann dadurch vorteilhaft weitergebildet werden, dass die Kontrollvorrichtung dazu eingerichtet ist, die Steuerungssignale, die Energieübertragung, und/oder einen Arretierzustand der an der jeweiligen Aufnahmevorrichtung aufgenommenen Handhabungseinrichtung zu überwachen.

Dies ist insbesondere dahingehend von Vorteil, um eventuell auftretende Fehlfunktionen der Handhabungseinrichtungen zu vermeiden und um die Sicherheit der Handhabungseinrichtung an der Transporteinrichtung wie auch die Sicherheit der Werkarbeiter in unmittelbarer Nähe der Handhabungseinrichtung zu gewährleisten.

Zudem können hierdurch fehlerhafte Aufnahmen bzw. fehlerhafte Bestandteile (beschädigte Kontakte der Verbindungen für Energie- und/oder Signalübertragung etc.) schneller lokalisiert werden und entsprechend schneller ausgetauscht/ repariert werden.

Die beispielhafte Transporteinrichtung kann dadurch vorteilhaft weitergebildet werden, dass der Antrieb eine Vielzahl an Rädern zum Bewegen der Plattform aufweist, wobei die Räder einzeln ansteuer- und/oder anlenkbar sind.

Insbesondere ist es vorteilhaft, wenn die Räder als einzelne Einheiten separat zueinander angesteuert bzw. angelenkt werden können, wodurch die Beweglichkeit und Manövrierfähigkeit der Transporteinrichtung im Vergleich mit Fahrzeugen mit nur einer lenkbaren Achse deutlich verbessert werden kann.

Die beispielhafte Transporteinrichtung kann dadurch vorteilhaft weitergebildet werden, dass die Räder als einzeln ansteuerbare Mecanum-Räder ausgebildet sind.

Der große Vorteil bei Mecanum-Rädern besteht darin, dass auf eine Lenkung der Räder gänzlich verzichtet werden kann und allein durch die Rotationsrichtung der einzelnen Räder die Fahrrichtung bzw. auch die Rotationsrichtung der Transporteinrichtung gesteuert werden kann. Voraussetzung für die Funktion bei Mecanum-Räder ist dabei aber, dass stets jedes Rad ausreichend Kontakt zum Boden hat.

Die beispielhafte Transporteinrichtung kann dadurch vorteilhaft weitergebildet werden, dass der Antrieb eine Vielzahl an Ketten zum Bewegen der Plattform aufweist.

Neben den klassischen Rädern und Mecanum-Rädern können aber auch Ketten zum Bewegen der Transporteinrichtung verwendet werden. Vorteilhaft kann dies sein, wenn die Transporteinrichtung große Lasten tragen muss und sich diese Lasten möglichst großflächig auf dem Boden, auf dem die Transporteinrichtung fährt, verteilen müssen / sollten.

Die beispielhafte Transporteinrichtung kann dadurch vorteilhaft weitergebildet werden, dass die Handhabungseinrichtung ein Palettenwechsler zum Ein- und Auswechseln der Palette in der Werkzeugmaschine ist, und der Palettenwechsler für das Ein- und Auswechseln der Palette im Arbeitsraum und/oder auf einem Rüstplatz der Werkzeugmaschine eingerichtet ist.

Insbesondere ist es von Vorteil, wenn die Handhabungseinrichtung, die durch die Transporteinrichtung transportiert werden kann, ein Palettenwechsler ist. Hierdurch können verschiedene Paletten mit nur einem Palettenwechsler und einer Transporteinrichtung zu den einzelnen Werkzeugmaschinen transportiert und eingelegt bzw. ausgetauscht werden.

Die beispielhafte Transporteinrichtung kann dadurch vorteilhaft weitergebildet werden, dass der Palettenwechsler zur Aufnahme der Palette eine Aufnahmeklaue oder eine gabelförmige Aufnahme aufweist.

Die beispielhafte Transporteinrichtung kann dadurch vorteilhaft weitergebildet werden, dass die Handhabungseinrichtung ein Industrieroboter zur Handhabung und/oder Bearbeitung des Werkstücks ist.

Es kann aber auch überaus vorteilhaft sein, neben oder statt dem Palettenwechsler einen Roboter (Industrieroboter) durch die Transporteinrichtung aufzunehmen und an Werkzeugmaschinen bzw. Bearbeitungsplätze zu transportieren, an denen ein Roboter gebraucht wird. Dies kann zum Beispiel bei Aufgaben des Werkstückhandlings sein (z.B. Bestückung des Maschinentisches/Palette oder der Arbeitsspindel mit Werkstücken, Ein- und Auswechseln von Werkzeugen aus einer Arbeitsspindel oder einem Werkzeugrevolver, Nacharbeiten von Werkstücken wie der Gratentfernung etc.). Die Anwendungsgebiete eines Roboters sind im Bereich der spanenden Bearbeitung mannigfaltig.

Die beispielhafte Transporteinrichtung kann dadurch vorteilhaft weitergebildet werden, dass die Aufnahmevorrichtungen der Transporteinrichtung ferner zur Aufnahme von Materialträgern, insbesondere Gitterboxen mit Rohteilen und/oder Fertigteilen, und zur Aufnahme eines Wechselgreifers eingerichtet sind.

Die beispielhafte Transporteinrichtung kann dadurch vorteilhaft weitergebildet werden, dass die Aufnahmevorrichtungen der Transporteinrichtung einheitlich ausgebildet sind.

Insbesondere ist es von Vorteil, wenn die Aufnahmevorrichtungen, durch die die Handhabungseinrichtungen wie Palettenwechsler, Roboter, Materialpaletten, Gitterboxen etc. von der Transporteinrichtung aufgenommen werden können, einheitlich, also standardisiert sind. Hierdurch können alle erdenklichen Handhabungseinrichtungen mit einer und dergleichen Schnittstelle versehen werden, so dass auch, egal welche Handhabungseinrichtung aufgenommen werden soll, die Herstellung der Verbindung für Energie- und/oder Signalübertragung automatisiert erfolgen kann.

Eine beispielhafte Werkzeugmaschine zur spanenden Bearbeitung eines Werkstücks, weist auf: eine Arbeitsspindel zum Aufnehmen eines Werkzeugs oder des Werkstücks, eine Palette zum Aufnehmen des Werkzeugs oder des Werkstücks, und eine Handhabungseinrichtung zur Handhabung der Palette und/oder des Werkstücks, wobei die Handhabungseinrichtung durch eine beispielhafte Transporteinrichtung an der Werkzeugmaschine positionierbar ist.

Hierdurch bietet sich eine Reihe von Vorteilen, da die Transporteinrichtung jede beliebige Handhabungseinrichtung zu der Werkzeugmaschine bringen kann, welche für die jeweilig anstehenden Bearbeitungsschritte erforderlich oder gar notwendig ist. Dabei kann die Werkzeugmaschine, insbesondere die Bestückung mit Werkstücken und/oder Werkzeugen, einen höheren Automatisierungsgrad erreichen und Zeiten, in denen die Werkzeugmaschinen autonom arbeiten, verlängert werden.

Durch den Einsatz der beispielhaften Transporteinrichtung konnte die Flexibilität in den Produktionsabläufen erheblich verbessert werden sowie schnell auf Veränderungen in der Produktion reagiert werden.

Weitere Aspekte und deren Vorteile als auch Vorteile und speziellere Ausführungsmöglichkeiten der vorstehend beschriebenen Aspekte und Merkmale werden aus den folgenden, jedoch in keiner Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Ausführungsform der erfindungsgemäßen Transporteinrichtung mit Aufnahmevorrichtungen zum Aufnehmen von Handhabungseinrichtungen und ohne aufgenommene Kühlmittelaustausch-, Kühlmittelzuführ- oder Kühlmittelabsaugmoduleinheit.
- Fig. 2a: zeigt schematisch eine Detailansicht einer Aufnahmevorrichtung zum Aufnehmen von Handhabungseinrichtungen ohne daran aufgenommene Kühlmittelaustausch-, Kühlmittelzuführ- oder Kühlmittelabsaugmoduleinheit.
- Fig. 2b: zeigt schematisch eine weitere Ausführungsform der Aufnahmevorrichtung der Transporteinrichtung zum Aufnehmen einer Handhabungseinrichtung ohne daran aufgenommene Kühlmittelaustausch-, Kühlmittelzuführ- oder Kühlmittelabsaugmoduleinheit.
- Fig. 3: zeigt schematisch eine Positionierung der erfindungsgemäßen Transporteinrichtung ohne aufgenommene Kühlmittelaustausch-, Kühlmittelzuführ- oder Kühlmittelabsaugmoduleinheit an einer Werkzeugmaschine mittels eines Prismas.
- Fig. 4a: zeigt schematisch eine Positionierung der erfindungsgemäßen Transporteinrichtung ohne aufgenommene Kühlmittelaustausch-, Kühlmittelzuführ- oder Kühlmittelabsaugmoduleinheit an einer Werkzeugmaschine mittels konischer Aufnahmen.
- Fig. 4b: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit bei einer Positionierung und Energie- und/oder Signalverbindungsschluss mittels konischer Aufnahmen.
- Fig. 4c: zeigt schematisch eine erfindungsgemäße Transporteinrichtung ohne aufgenommene Kühlmittelaustausch-, Kühlmittelzuführ- oder Kühlmittelabsaugmoduleinheit, bei der ein aufgenommener exempalrischer Palettenhalter mit einer Palette mittels der Transporteinrichtung an eine Palettenhalteraufnahme andockt.
- Fig. 4d: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exempalrisch mit einem Palettenhalter.
- Fig. 5a: zeigt schematisch eine Ausführungsform der erfindungsgemäßen Transporteinrichtung ohne aufgenommene Kühlmittelaustausch-, Kühlmittelzuführ- oder Kühlmittelabsaugmoduleinheit mit einer Höhenverstellung der erfindungsgemäßen Transporteinrichtung mittels Hubzylindern.
- Fig. 5b: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit mit einer Höhenverstellung der erfindungsgemäßen Transporteinrichtung mittels Hubzylindern und einem Fahrwerk.
- Fig. 6a: zeigt schematisch einen Hallenboden/Platte mit rasterförmig angeordneten Konen zur Positionierung der Transporteinrichtungen bzw. Handhabungseinrichtungen.
- Fig. 6b: zeigt eine weitere Möglichkeit, die Konen an der Unterseite der Transporteinrichtung für die Positionierung vorzusehen.
- Fig. 7a: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Industrieroboter als Handhabungseinrichtung.
- Fig. 7b: zeigt schematisch zwei konkretere Ausführungsbeispiele der erfindungsgemäßen Transporteinrichtung ohne aufgenommene Kühlmittelaustausch-, Kühlmittelzuführ- oder Kühlmittelabsaugmoduleinheit, sondern exemplarisch mit aufgenommenen Roboter für Werkzeug- bzw. Werkstück-Handling.
- Fig. 8: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Industrieroboter und einer Vermessungseinheit zur Werkzeugprüfung.
- Fig. 9a: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Industrieroboter und Mess- und Prüfmitteln zur Bauteilprüfung.
- Fig. 9b: zeigt Detailansicht der Ausführungsform der Transporteinrichtung nach Fig. 9a.
- Fig. 10: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Industrieroboter und einem Aufsatz zur Nachbearbeitung von Bauteilen.
- Fig. 11: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Industrieroboter und einer Einheit zum Schärfen und Abrichten von Werkzeugen.
- Fig. 12: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Industrieroboter und einem Magazin zur Mitführung von verschiedenen Werkzeugen.
- Fig. 13: zeigt schematisch die Ausführungsform der Transporteinrichtung in Fig. 6 bei der Interaktion von dem Industrieroboter mit einer Arbeitsspindel einer Werkzeugmaschine, um beispielsweise das Werkzeug zu wechseln.
- Fig. 14a: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit Spänewagen.
- Fig. 14b: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit Hebemechanismus und zusätzlichem Spänebehälter.
- Fig. 14c: zeigt schematisch eine weitere Ausführungsform der Transporteinrichtung ohne aufgenommene Kühlmittelaustausch-, Kühlmittelzuführ- oder Kühlmittelabsaugmoduleinheit, sondern exemplarisch mit aufgenommenem Modul zum Auffangen der Späne auf der Oberseite der Transporteinrichtung.
- Fig. 15: zeigt schematisch eine weitere Ausführungsform der erfindungsgemäßen Transporteinrichtung zur Aufbereitung und Wiederbefüllung einer Werkzeugmaschine mit Kühl-Schmierstoff.
- Fig. 16: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch zur Bereitstellung und Einführung von Werkstücken in eine Werkzeugmaschine für Drehbearbeitung.
- Fig. 17a: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit Materialspeicher für eine Werkzeugmaschine mit Gantry-Lader.
- Fig. 17b: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit Materialspeicher für eine Werkzeugmaschine mit Roboter zum Ein- und Auswechseln von Werkstücken in die Werkzeugmaschine.
- Fig. 18a: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit Förderband zwischen zwei Werkzeugmaschinen mit Gantry-Lader.
- Fig. 18b: zeigt schematisch eine Detailansicht der Transporteinrichtung nach Fig. 18a
- Fig. 18c: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit klappbarem Förderband.
- Fig. 19: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch für die unterstützende Absaugung des Arbeitsraumes einer Werkzeugmaschine.
- Fig. 20: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit Roboter und einer von dem Roboter aufgenommenen Auftragvorrichtung für additives Fertigen.
- Fig. 21: zeigt schematisch eine weitere Ausführungsform der erfindungsgemäßen Transporteinrichtung ohne aufgenommene Kühlmittelaustausch-, Kühlmittelzuführ- oder Kühlmittelabsaugmoduleinheit, sondern exemplarisch mit einem Werkzeugwechsler, einer Wechsler-Speicher-Kombination oder einem Werkzeugspeicher.
- Fig. 22: zeigt schematisch eine Vielzahl an Transporteinrichtungen mit unterschiedlichen Aufgaben innerhalb einer Produktionskette, jeweils ohne aufgenommene Kühlmittelaustausch-, Kühlmittelzuführ- oder Kühlmittelabsaugmoduleinheit.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer der Merkmale der beschriebenen Beispiele im Rahmen des durch die Ansprüche definierten Schutzumfanges umfasst sind.

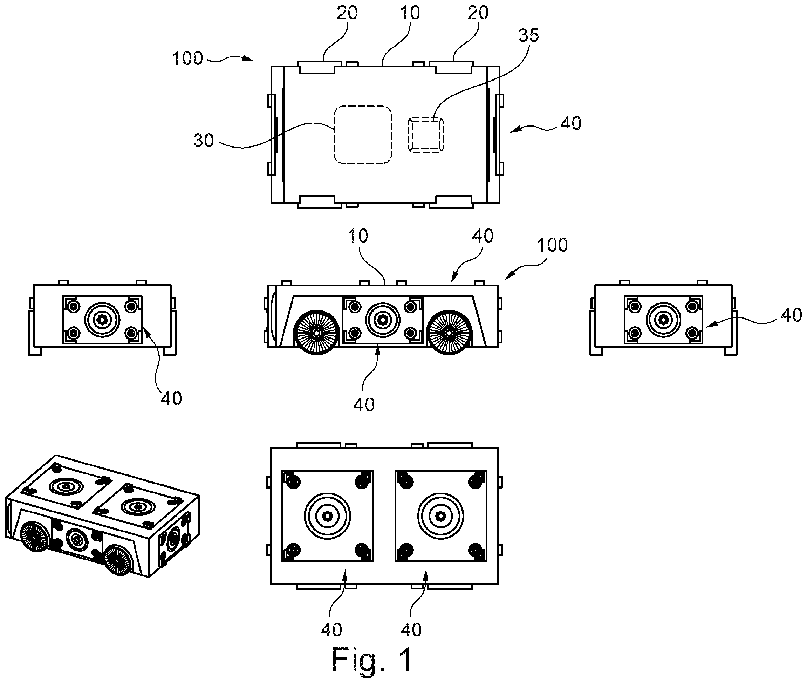

Fig. 1 zeigt schematisch eine Ausführungsform der n Transporteinrichtung 100 mit Aufnahmevorrichtungen 40 zum Aufnehmen von Handhabungseinrichtungen und ohne aufgenommene Kühlmittelaustausch-, Kühlmittelzuführ- oder Kühlmittelabsaugmoduleinheit.

Die in Fig. 1 gezeigte Ausführungsform der n Transporteinrichtung 100 ist in einer besonders bevorzugten Ausführungsform als Fahrerloses Transportfahrzeug (FTF) eines Fahrerlosen Transportsystems (FTS) ausgestaltet.

Dabei weist die Transporteinrichtung 100 ein Fahrgestell 10 (Plattform) und einen Antrieb 20 auf. Dabei ist das Fahrgestell zur Aufnahme eines Energiespeichers 30 eingerichtet, wobei hierfür vorzugsweise ein elektrischer Energiespeicher 30 wie eine Batterie Anwendung findet. Jedoch ist der Energiespeicher 30 nicht auf elektrische Energie beschränkt, so dass auch mechanische Energie im Bedarfsfall gespeichert werden kann in Form von z.B. unter Druck gesetzte Fluide oder Verformungsenergie (z.B. eines federnden Elementes). Weitere Energiespeicher für z.B. Hydraulik oder Pneumatik können ebenso in dem Fahrgestell 10 untergebracht sein.

Weiterhin umfasst die Transporteinrichtung 100 in besonders bevorzugter Weise Räder 20, um die Transporteinrichtung 100 z.B. in einer Werkshalle zu bewegen. Dabei können diese Räder 20 über einen Antriebsstrang (nicht dargestellt) mit einem zentralen Antriebsmotor verbunden sein, sie können aber auch jeweils über einen eigenen Antriebsmotor (z.B. einen oder mehrere Elektromotoren) verfügen, welche durch eine interne Steuerung 35 einzeln angesteuert werden können.

Weiterhin können die Räder 20 einzeln angelenkt werden, so dass eine überaus flexible Fahrweise und Positionierung (beispielsweise Drehen auf der Stelle, Seitwärtsfahrten etc.) der Transporteinrichtung 100 ermöglicht werden. Die Räder 20 können aber auch durch eine gegensätzlich gerichtete Bewegung die Transporteinrichtung 100 in eine drehende Bewegung versetzen, um eine Positionierung der Transporteinrichtung 100 herbeizuführen.

Alternativ können statt der Räder 20 auch Ketten bzw. ein Raupenfahrwerk bzw. eine Kombination aus Rädern 20 und Ketten / Raupenfahrwerk genutzt werden, um die Beweglichkeit bzw. die Flexibilität der Transporteinrichtung 100 weiter zu erhöhen.

Eine besonders bevorzugte Ausführungsform der Räder 20 sind sogenannte Mecanum-Räder. Sie ermöglichen durch bloße Steuerung ihrer Drehrichtung eines jeden Rades 20 eine Rotationsbewegung (Drehbewegung) der Transporteinrichtung 100 auf der Stelle, eine Translationsbewegung der Transporteinrichtung 100 sowohl in Längsrichtung (Vorwärts, Rückwärts) als auch in Querrichtung (Seitwärtsbewegung) der Transporteinrichtung 100, sowie im 45°-Winkel zur Längs- bzw. Querrichtung.

Durch den Einsatz von Mecanum-Rädern kann in vorteilhafter Weise auf einen Lenkmechanismus für die Räder 20 gänzlich verzichtet werden und einzig allein mit der internen Steuerung 35 eine entsprechende Positionierbewegung der Transporteinrichtung 100 erzeugt werden.

Ferner ist das Fahrgestell 10 vorzugsweise als Plattformträger ausgestaltet, welcher verschiedenste Aufnahmevorrichtungen 40 für Handhabungseinrichtungen (z.B. Automationskomponenten oder Transportkomponenten etc.) aufweist.

Dabei verfügt der Plattformträger besonders bevorzugt über n+1 Aufnahmevorrichtungen 40 für die verschiedenen Handhabungseinrichtungen, wobei die Aufnahmevorrichtungen 40 besonders bevorzugt am gesamten Plattformträger angeordnet sind. Insbesondere werden bevorzugt alle Seiten (Raumebenen) der Transporteinrichtung 100 für das Vorsehen einer Aufnahmevorrichtung 40 genutzt (siehe hierzu auch die verschiedenen Ansichten der Transporteinrichtung 100 in Fig. 1). Hierdurch können nun weit mehr Handhabungseinrichtungen aufgenommen und entsprechend bewegt werden als dies zum Beispiel mit einem handelsüblichen Transportfahrzeug wie einem Gabelstapler oder einem motorisierten Hubwagen möglich ist.

Jedoch sei darauf hingewiesen, dass die Anzahl und/oder die Verteilung der Aufnahmevorrichtungen 40 auf der Transporteinrichtung 100 nicht auf die in Fig. 1 gezeigte Anzahl/Verteilung beschränkt ist. Es kann beispielweise auch nur eine einzelne Aufnahmevorrichtung 40 beispielsweise auf der Oberseite der Transporteinrichtung 100 vorgesehen sein, und/oder aber auch zwei und mehr Aufnahmevorrichtungen 40 an einer oder mehreren Seiten der Transporteinrichtung 100 vorgesehen sein.

Ferner können die Aufnahmevorrichtungen 40, die auf der Oberseite der Transporteinrichtung 100 vorgesehene sind, von ihrer Größe und ihren Eigenschaften von den Aufnahmevorrichtungen 40 an den Seiten der Transporteinrichtung 100 abweichen. Dies kann beispielsweise dann vorteilhaft sein, wenn kleinere Handhabungseinrichtungen mit einem vergleichsweise geringen Gewicht an den Seiten der Transporteinrichtung 100 aufgenommen werden sollen und die schwereren Handhabungseinrichtungen vorzugsweise über den Achsen/dem Antrieb 20 der Transporteinrichtung 100 positioniert werden sollen.

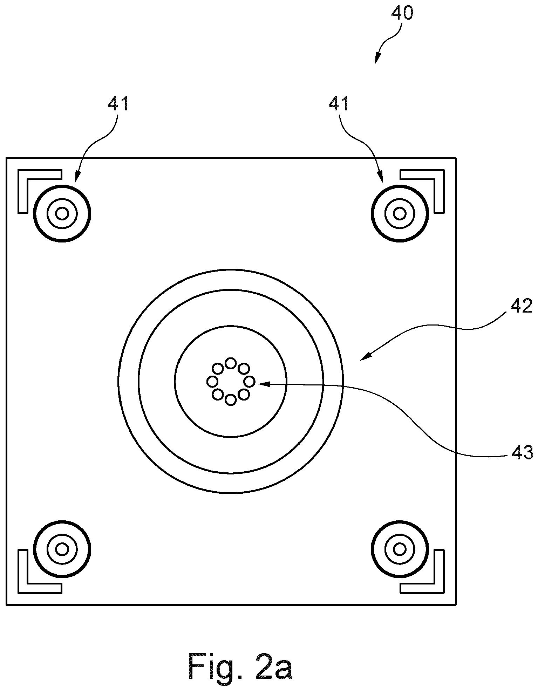

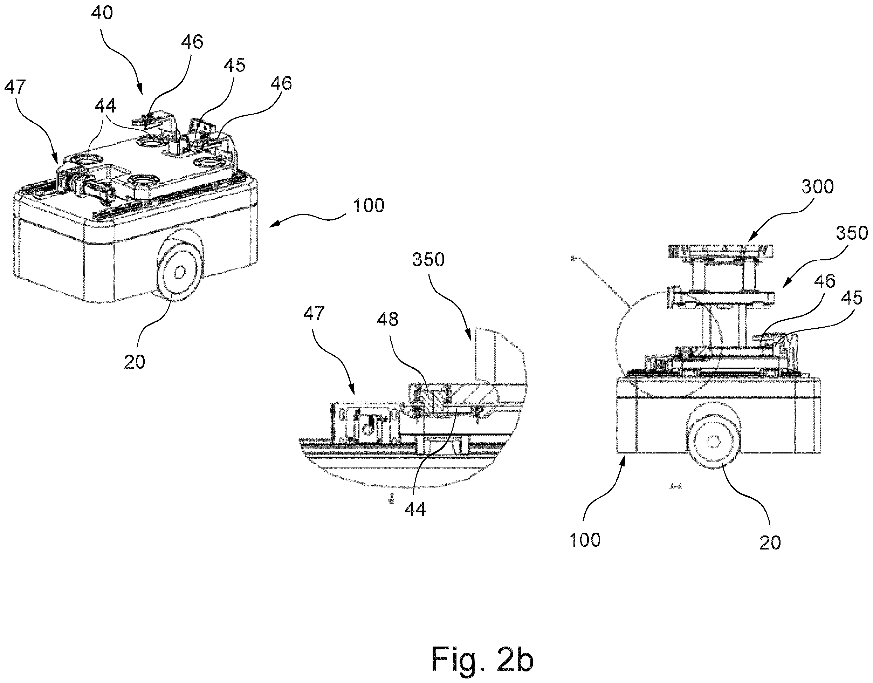

Weiterhin können beispielsweise aber auch die kleineren Aufnahmevorrichtungen 40 an den Seiten der Transporteinrichtung 100 über eine geringere Anzahl an Anschlüssen (siehe hierfür die Erläuterungen zur Fig. 2) im Vergleich zu den größeren Aufnahmevorrichtungen 40 auf der Oberseite der Transporteinrichtung 100 verfügen.

Vorzugsweise ist die Transporteinrichtung 100 mit einer Einheit zur optischen Überwachung seiner Umgebung (hier nicht gezeigt) und der angekoppelten Handhabungseinrichtungen ausgestattet. Diese Einrichtung ist vorzugsweise mit der Steuerungssoftware der internen Steuerung 35 gekoppelt und ermöglicht es auf Basis der Erkennung eine Handlung durchzuführen.

Zudem sind vorzugsweise weitere Sensoren in der Transporteinrichtung 100 verbaut, welche es ermöglichen, die Umgebung und Komponenten geeignet zu überwachen. Beispielsweise können Infrarot oder Radarsensoren eingesetzt werden.

Fig. 2a zeigt schematisch eine Detailansicht einer Aufnahmevorrichtung 40 zum Aufnehmen von Handhabungseinrichtungen (oder jeglicher anderer Einrichtungen) und ohne daran aufgenommene Kühlmittelaustausch-, Kühlmittelzuführ- oder Kühlmittelabsaugmoduleinheit.

Dabei sind die Aufnahmevorrichtungen 40 vorzugsweise zur mechanischen Fixierung der Handhabungseinrichtungen, zur Signalübertragung und Energieübertragung an die jeweilige Handhabungseinrichtung eingerichtet. Es kann je nach Handhabungseinrichtung nur eine der Übertragungsmöglichkeiten oder aber auch eine beliebige Kombination daraus genutzt werden.

Ferner sind besonders bevorzugt die Aufnahmevorrichtungen 40 automatisiert ausgeführt. Somit kann die Transporteinrichtung 100 selbständig die Handhabungseinrichtungen austauschen und ist dadurch flexibel für verschiedenste Aufgaben einsetzbar. Bei automatisierten Ausführungen der Transporteinrichtung 100 eignen sich zudem insbesondere Schnellkupplungen (z.B. Frontlader-Schnellkupplung) um automatisiert eine Verbindung für Energieübertragung bzw. Signalübertragung zwischen der Transporteinrichtung 100 und der Handhabungseinrichtung herzustellen.

Wie in Fig. 2a gezeigt, können beispielsweise konenförmige Abschnitte 41 der Aufnahmevorrichtung 40 dazu vorgesehen sein, die entsprechende Handhabungseinrichtung gegenüber der Aufnahmevorrichtung 40 auszurichten und zu fixieren. Für ein derartigen Ausrichten und gleichzeitiges Fixieren der Handhabungseinrichtung an der Aufnahmevorrichtung 40 können hier vorteilhaft Spannkonen verwendet werden, wie sie beispielsweise bereits von der Aufnahme für Paletten in einer Werkzeugmaschine bekannt sind.

Weiterhin kann die Aufnahmevorrichtung 40 eine Schnittstelle 42 zur Übertragung von mechanischer Energie (beispielsweise eine Rotation eines in der Transporteinrichtung 100 vorgesehenen Motors auf die Handhabungseinrichtung) und/oder elektrischer, hydraulischer und/oder pneumatischer Energie aufweisen. Ferner könnten aber auch beispielsweise Betriebsmittel wie Kühl-Schmierstoff von der Transporteinrichtung der entsprechend an der Aufnahmevorrichtung 40 aufgenommenen Handhabungseinrichtung zugeleitet werden. Hierfür können beispielsweise entsprechende Befestigungsmittel und elektrische und/oder Fluide leitende Anschlüsse (Befestigungsmittel und Anschlüsse 43) vorgesehen sein.

Zudem kann in vorteilhafter Weise die Schnittstelle 42 eine Einrichtung zur kontaktlosen Übertragung von Signalen zwischen der Aufnahmevorrichtung 40 der Transporteinrichtung 100 und der Handhabungseinrichtung aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 42 oder auch außerhalb der Schnittstelle 42 vorgesehen sein, wobei in vorteilhafter Weise die Einrichtung zur kontaktlosen Signalübertragung zentral/mittig in der Schnittstelle 42 vorgesehen ist.

Es sei an dieser Stelle darauf hingewiesen, dass beispielsweise die elektrischen und/oder Fluid leitenden Anschlüsse nicht zwingend auf der Schnittstelle 42 vorgesehen sein müssen. Sie können ebenfalls außerhalb der Schnittstelle 42 vorgesehen sein, um beispielsweise die Übertragung von rotatorischer Energie von der Übertragung der elektrischen/fluiden Energie zu trennen/zu separieren.

Zudem sind in besonders bevorzugter Weise die Aufnahmevorrichtungen 40 einheitlich bzw. standardisiert ausgeführt, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Weiterhin verfügen die Aufnahmevorrichtungen 40 vorzugsweise über die Möglichkeit, den Zustand der aufgenommenen Handhabungseinrichtung zu überwachen. Dazu gehören vorzugsweise die Überwachung der Spannsituation der gekoppelten Handhabungseinrichtung (beispielsweise an den Spannkonen), deren Status und Signale, sowie deren Energieübertragung.

Bei der Überwachung des Spannungszustandes können hierfür vorzugsweise eine Auflagekontrolle oder eine Spannkontrolle in den Aufnahmevorrichtungen 40 verwendet werden, wobei die Auflagekontrolle vorzugsweise über elektrische Signale den Zustand ermittelt, oder aber alternativ Blasluft dafür verwenden kann.

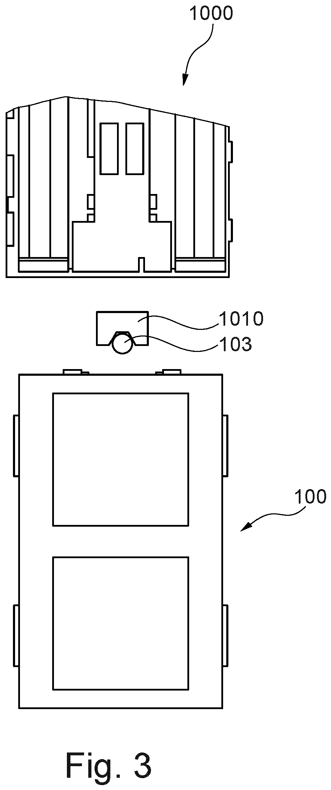

Beispielhaft kann die Transporteinrichtung 100 die folgenden Handhabungseinrichtungen aufnehmen: Palettenwechsler (z. B. bekannt aus Werkzeugmaschinen), Roboter, Materialpaletten, Gitterboxen und weitere Materialträger, Ablageplätze für Roboterzubehör (z. B. Wechselgreifer), Entgratstationen, Waschstationen, Werkzeuge für z. B. Werkzeugmaschinen, Staplergabel etc. Für weitere Details sei an dieser Stelle auf die Figuren 3 bis 11 und 22 bis 36 verwiesen.

Es sei an dieser Stelle darauf hingewiesen, dass die Möglichkeiten an Handhabungseinrichtungen, die durch die Aufnahmevorrichtungen 40 der Transporteinrichtung 100 aufgenommen werden können, in keiner Weise durch die oben genannte Aufzählung erschöpft sind.

Weiterhin ist die Transporteinrichtung 100 vorteilhafterweise derart gestaltet, dass sich die Handhabungseinrichtungen beliebig miteinander kombinieren lassen, um so eine größere Flexibilität bei spezifischen Anwendungen zu ermöglichen.

Vorzugsweise verfügt die interne Steuerung 35 der Transporteinrichtung 100 über eine eigene Steuersoftware, welche die Verfahr- und Transportbewegungen steuern und überwachen kann. Die Steuersoftware könnte zum Beispiel um einzelne Softwarebausteine erweitert werden, welche für die jeweiligen Komponenten bzw. Handhabungseinrichtungen notwendig sind. Dabei kann es sich z.B. um die Anbindung einer Robotersteuerung oder um die Anbindung der Ansteuerung eines Palettenwechslers handeln.

Fig. 2b zeigt schematisch eine weitere Ausführungsform der Aufnahmevorrichtung 40 der Transporteinrichtung 100 zum Aufnehmen einer Handhabungseinrichtung (oder jeglicher anderer Einrichtungen) und ohne aufgenommene Kühlmittelaustausch-, Kühlmittelzuführ- oder Kühlmittelabsaugmoduleinheit.

Dabei weist die Aufnahmevorrichtung 40 mindestens eine Vertiefung 44 (beispielsweise eine Ausfräsung oder eine Bohrung) auf, durch die ein Bolzen 48 einer Einrichtung (beispielsweise Handhabungseinrichtung, Palettenhalter 350 oder jegliche andere Einrichtung) aufgenommen werden kann. Dabei weist die Vertiefung 44 eine größere Ausdehnung auf als beispielsweise der Durchmesser des Bolzens 48, so dass der Bolzen 48 auf dem Grund der Vertiefung 44 verschiebbar gelagert werden kann. Ferner kann die Vertiefung 44 an ihrer Oberseite zusätzlich oder alternativ zum Grund mindestens eine Aufnahmefläche (zur Auflage der aufgenommenen Einrichtung) aufweisen, durch die die Einrichtung aufgenommen werden kann.

Es sei an dieser Stelle bereits darauf hingewiesen, dass die Vertiefungen 44 an der Einrichtung vorgesehen sind, und die Bolzen 48 dafür an der Aufnahmevorrichtung 40 vorgesehen sind. Zudem sei darauf hingewiesen, dass es neben der Kombination Vertiefung 44/Bolzen 48 auch noch andere Formpaarungen zur Aufnahme der Einrichtung an der Aufnahmevorrichtung 40 denkbar sind, beispielsweise Prisma und Kegel. Die hier genannten und beschriebenen Möglichkeiten sind nicht als abschließend aufzufassen.

Ferner kann die Aufnahmevorrichtung 40 eine Vorrichtung 46 zur Zentrierung der von der Aufnahmevorrichtung 40 aufgenommenen Einrichtung (hier Palettenhalter 350) gegenüber der Transporteinrichtung 100 bzw. der Aufnahmevorrichtung 40 aufweisen. Dies ist insbesondere von Vorteil, um eventuelle Positionierungenauigkeiten der aufgenommenen Einrichtung auf der Aufnahmevorrichtung 40 durch die Transporteinrichtung 100 auszugleichen.

Dabei erfolgt die Aufnahme und gegebenenfalls eine Zentrierung des beispielhaften Palettenhalters 350 an der Aufnahmevorrichtung 40 bzw. durch die Zentriervorrichtung 46 wie folgt:
Zu Beginn fährt die Transporteinrichtung 100 mit der jeweiligen Aufnahmevorrichtung 40 (und einer gewissen Positionierungenauigkeit) unter die aufzunehmende Einrichtung (hier beispielsweise der Palettenhalter 350). Dabei kann der Palettenhalter 350 gegen ein Druckstück 45 gedrückt werden, dass an der Seite der Aufnahmevorrichtung 40 vorgesehen ist, wie die Zentriervorrichtung 46. Dieses Druckstück 45 sorgt für eine Vorspannung des Palettenhalters 350 gegenüber der Aufnahmevorrichtung 40 in entgegengesetzter Richtung zur Zentriervorrichtung 46.

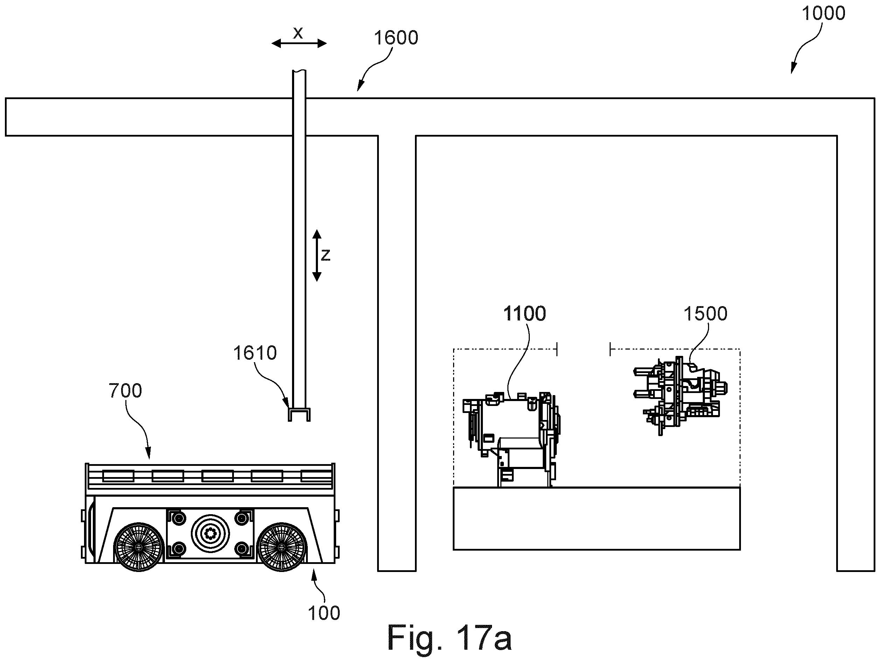

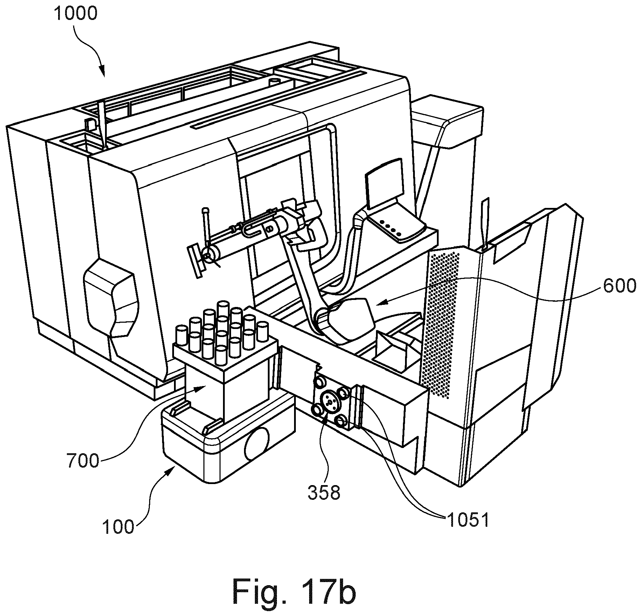

Anschließend hebt sich die Transporteinrichtung 100 an (beispielsweise durch einen Mechanismus wie in Fig. 17a und 17b gezeigt), so dass die Bolzen 48 in die Vertiefungen 44 einfädeln, wobei die Transporteinrichtung 100 so lange weiter angehoben wird, bis der Palettenhalter 350 vollständig in den Vertiefungen 44 bzw. an deren Oberseite aufliegt.

Danach hebt sich die Transporteinrichtung 100 weiter an, bis der Palettenhalter 350 aus seiner Aufnahme (hier nicht gezeigt) herausgehoben wird und damit vollständig von der Transporteinrichtung 100 getragen wird.

Im Anschluss daran kann nun der Palettenhalter 350 auf der Aufnahmevorrichtung 40 zentriert (und dabei auch fixiert) werden. Hierbei kann beispielsweise der Antrieb 47 zur Verschiebung der Vertiefungen 44, die beispielsweise auf einer Gleit- oder Kugelführung gleitend gelagert sind, in Richtung der Zentriervorrichtung 46 aktiv werden.

Durch ihn wird der bisher auf der Aufnahmevorrichtung 40 (bzw. in und/oder auf den Vertiefungen 44) schwimmend gelagerte Palettenhalter 350 in Richtung der Zentriervorrichtung 46 verschoben und gegen die Zentriervorrichtung 46 (und evtl. auch stärker gegen das Druckstück 45) gedrückt, so dass eine Ausrichtung des Palettenhalters 350 an der Zentriervorrichtung 46 erfolgt (beispielsweise in dem die Zentriervorrichtung 46 ein Prisma/zwei Prismen aufweist und sich entsprechende Stifte/Bolzen des Palettenhalters 350 an diesem Prisma/diesen Prismen ausrichtet).

Dabei kann der Antrieb 47 zwei Endlagen aufweisen: Zum einen, wenn der Antrieb 47 die Vertiefungen so weit wie möglich in Richtung Zentriervorrichtung 46 verschoben/verfahren hat, dann ist der Palettenhalter 350 fixiert und ausgerichtet. Und zum anderen, wenn der Antrieb 47 die Vertiefungen 44 mit dem größtmöglichen Abstand zur Zentriervorrichtung 47 verfahren hat, der Palettenhalter 350 frei ist und sich dieser anhand anderer Elemente (beispielsweise anhand einer Aufnahme an einer Werkzeugmaschine, einem Rüstplatz, einem Magazinplatz oder Ähnlichem) ausrichten kann. In diesem Zustand kann der Palettenhalter 350 entsprechend an eine Aufnahme übergeben oder von der Aufnahme aufgenommen werden.

Die Fixierung des Palettenhalters 350 auf der Aufnahmevorrichtung 40 kann nun derart erfolgen, dass zum einen die Zentriervorrichtung 46 selbst einen Fixierabschnitt aufweist, in den der Palettenhalter 350 eingefädelt wird und dort arretiert wird.

Oder aber die Vertiefungen 44 werden durch den Antrieb 47 derart weit in Richtung der Zentriervorrichtung 46 verschoben, dass mindestens ein Bolzen 48 des Palettenhalters 350 gegen der der Zentriervorrichtung 46 abgewandten Seite einer der Vertiefungen 44 gedrückt wird (siehe hierfür das mittlere Bild der Fig. 2b) und dadurch eine Fixierung des Palettenhalters 350 gegenüber der Aufnahmevorrichtung 40 erfolgt.

Ferner kann eine Fixierung des Palettenhalters 350 an der Aufnahmevorrichtung 40 auch dadurch herbeigeführt werden, dass das Druckstück 45 den Palettenhalter 350 gegen die der Zentriervorrichtung 46 abgewandten Seite einer der Vertiefungen 44 drückt (siehe hierfür das mittlere Bild der Fig. 2b).

Es sei an der Stelle darauf hingewiesen, dass aber auch alle genannten Möglichkeiten der Fixierung des Palettenhalters 350 gegenüber der Aufnahmevorrichtung 40 in Kombination miteinander stattfinden können. Zudem sei darauf hingewiesen, dass die genannten Möglichkeiten der Fixierung nicht als abschließend aufzufassend sind, es können hier noch weitere Möglichkeiten in Betracht kommen.

Es sei zudem darauf hingewiesen, dass der Antrieb 47 nicht zwingend notwendig ist, um den Palettenhalter 350 zu fixieren bzw. zu zentrieren. Es können vielmehr auch noch weitere Möglichkeiten zur Zentrierung des Palettenhalters 350 gegenüber der Aufnahmevorrichtung 40 der Transporteinrichtung 100 genutzt werden.

Fig. 3 zeigt schematisch eine Positionierung der Transporteinrichtung 100 ohne aufgenommene Kühlmittelaustausch-, Kühlmittelzuführ- oder Kühlmittelabsaugmoduleinheit an einer Werkzeugmaschine 1000 mittels eines Prismas 1010.

Dabei verfügt die Transporteinrichtung 100 ferner über ein entsprechendes Gegenstück 103 (hier ein zylindrisches Gegenstück), um in das Prisma mit dem Gegenstück 103 einzufahren und so eine genaue Positionierung vor der Werkzeugmaschine 1000 zu erreichen. Es können jedoch auch mehrere Prismen 1010 und entsprechend mehrere Gegenstücke 103 für eine derartige Positionierung der Transporteinrichtung 100 vor der Werkzeugmaschine 1000 verwendet werden, sowohl in eine Richtung positionierend (z.B. in Längsrichtung der Transporteinrichtung 100) als auch in eine Richtung senkrecht dazu (z.B. Querrichtung der Transporteinrichtung 100).

Es sei an dieser Stelle darauf hingewiesen, dass die oben genannten Ausgestaltungsmöglichkeiten der Positionierung der Transporteinrichtung 100 nicht auf die Kombination Prisma 1010 und zylindrisches Gegenstück 103 beschränkt ist. Vielmehr könnte beispielsweise ein Teil mit einer V-förmigen Kerbe (als Alternative zum Prisma 1010) ebenfalls Verwendung finden.

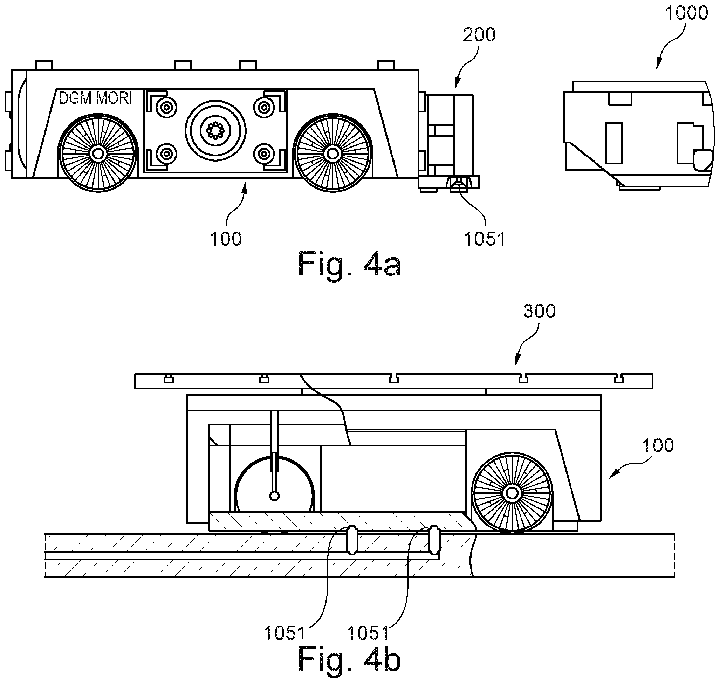

Fig. 4a zeigt schematisch eine Positionierung der Transporteinrichtung 100 ohne aufgenommene Kühlmittelaustausch-, Kühlmittelzuführ- oder Kühlmittelabsaugmoduleinheit an einer Werkzeugmaschine 1000 mittels konischer Aufnahmen 1051.

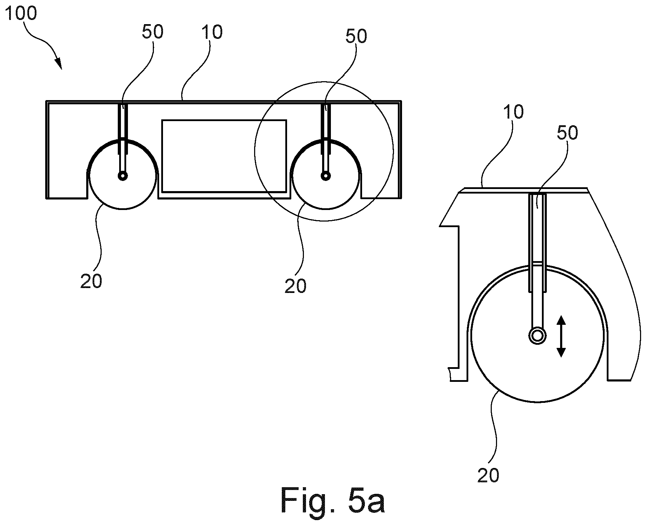

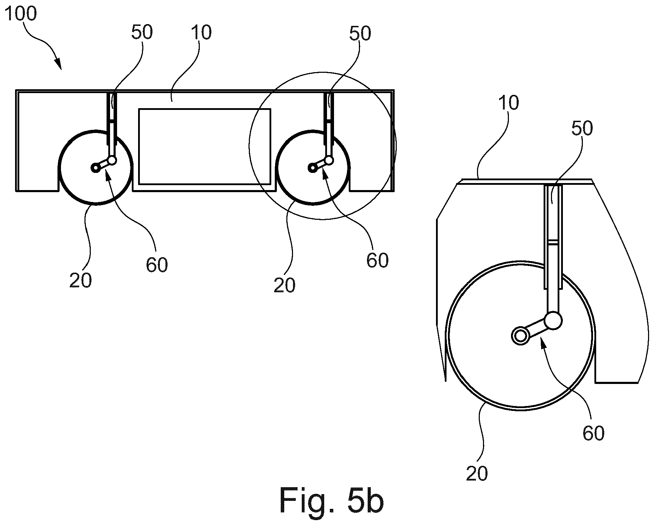

Dabei verfügt die Transporteinrichtung 100 über eine Höhenverstellung (hier nicht gezeigt, siehe dazu Figur 5), die es ermöglichen, die Handhabungseinrichtung (hier beispielsweise einen Palettenwechsler 200) auf die konischen Aufnahmen 1051 der Werkzeugmaschine 1000 zu setzen und so eine sehr genaue Positionierung der Handhabungseinrichtung vor der Werkzeugmaschine 1000 zu erreichen.

Ferner ermöglichen die konischen Aufnahmen 1051 eine Lastaufnahme der Handhabungseinrichtung, welche insbesondere dann von entscheidendem Vorteil ist, wenn die Handhabungseinrichtung bei ihrer Verwendung große Massen zu tragen hat, welche eventuell die Lastaufnahmefähigkeit der Transporteinrichtung 100 übersteigen würde, zum Beispiel bei Paletten 300 mit besonders großen bzw. schweren Werkstücken 1 und der auftretenden Belastung beim Entnehmen der Palette 300 mit dem Werkstück 1.

Vorzugsweise verfügt die Transporteinrichtung 100 über eine definierte Position vor der Werkzeugmaschine 1000, bzw. den Ablageplätzen 500 / Rüstplätzen. Die Positionierung kann mechanisch, signaltechnisch oder kombiniert gewährleistet sein.

Diese Positionierung kann vorzugsweise über n mechanische Indexe via horizontal angeordneter Bewegung(en) (siehe Fig. 3) oder vertikaler Bewegung(en) ausgeführt werden. Alternativ können hierfür auch Drehbewegung(en) genutzt, die Bewegungen miteinander gekoppelt oder nacheinander ausgeführt werden.

In einer beispielhaften Ausführung wird die Positionierung durch eine vertikale Bewegung gewährleistet (siehe hierzu im Detail die Figur 5).

Die Indexe können entweder mit den Werkzeugmaschinen 1000, den Ablageplätzen 500 und Rüstplätzen verbunden werden. Vorzugsweise werden die Indexe mit dem Hallenboden verbunden um keinerlei Störgrößen wie z. B. Schwingungen, Stöße auf die Werkzeugmaschine 1000 oder die Plätze zu bringen, während die Transporteinrichtung 100 positioniert wird.

Vorzugsweise werden die Indexe konenförmig ausgeführt (konische Aufnahmen 1051). Dadurch ist eine Positionierung in allen notwendigen Ebenen gewährleistet. Vorzugsweise sind die konischen Aufnahmen 1051 dabei so positioniert, dass sie nicht im eigentlichen Trittbereich vor der Werkzeugmaschine 1000 sind und damit den Bediener beim manuellen Arbeiten ergonomisch nicht behindern.

Vorzugsweise werden die konischen Aufnahmen 1051 dazu genutzt auch vertikal auftretende Lasten, die z. B. beim Palettenwechsel durch die zu entnehmende Palette 300 entstehen, aufzunehmen. Dadurch kann die Transporteinrichtung 100 auf die maximale Transportkapazität ausgelegt werden und muss keine durch Austauschvorgänge kurzfristig auftretenden Zusatzlasten aufnehmen.

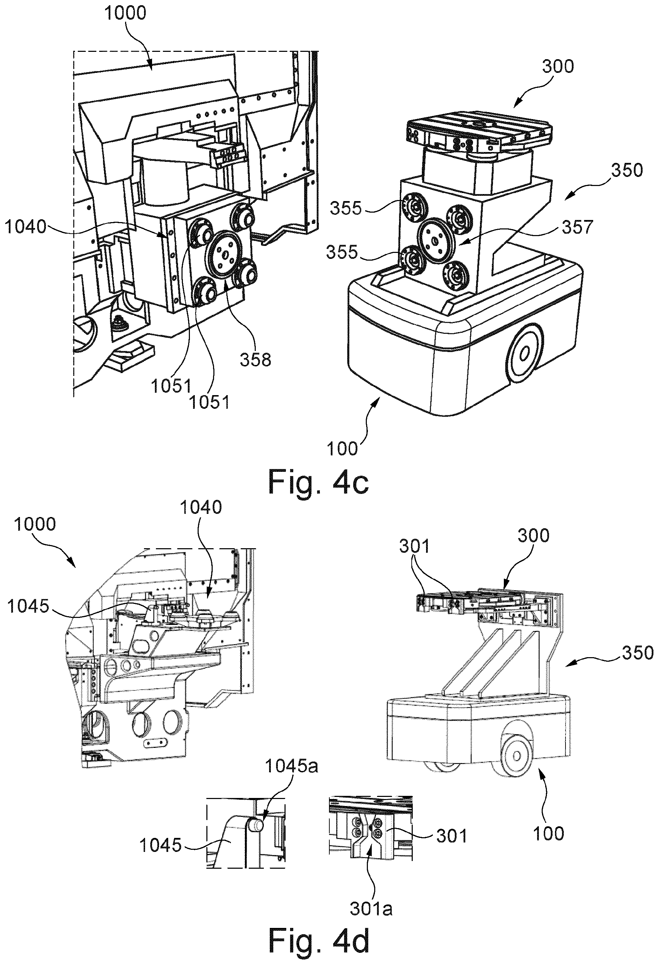

Weiterhin können die konischen Aufnahmen 1051 (siehe hierzu auch Fig. 4b und 4c) dazu genutzt werden, eine Verbindung zwischen Werkzeugmaschine 1000, Plätzen und Transporteinrichtung 100 herzustellen. Diese Verbindung kann zur Signalübertragung oder zum Energieaustausch genutzt werden, falls dies nicht berührungslos gestaltet werden kann.

Weiterhin kann die o. g. Verbindung auch durch eine weitere Aufnahme realisiert werden, welche durch den Konenhub angedockt wird.

Zudem können die konischen Aufnahmen 1051 ver- und entriegelt werden um die Positionierung zusätzlich zu stabilisieren bzw. deren Genauigkeit zu erhöhen.

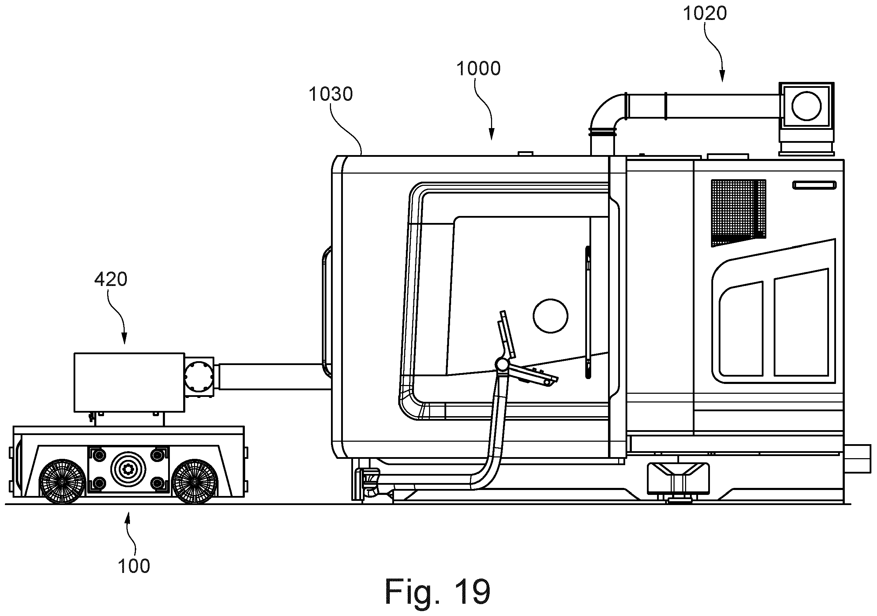

Die vertikalen Bewegungen der Transporteinrichtung 100 können durch Nutzung der auf der Transporteinrichtung 100 vorhandenen Medien angetrieben und angesteuert werden. Vorzugsweise kann jede der Aufnahmevorrichtungen 40 die Vertikalbewegung selbständig und unabhängig voneinander ausführen (siehe hierzu Fig. 19). Alternativ kann die Vertikalbewegung durch Anheben des Rahmens / Gestells des FTS relativ zu den Rädern erfolgen (siehe hierzu Figur 5).

Die Hubbewegung kann frei alle notwendigen Positionen anfahren um einen geeigneten Ablauf zu finden. In einer beispielhaften Ausführung sind drei Hauptpositionen vorgesehen:
Hub oben: Position in welcher die Transporteinrichtung 100 verfahren kann.
Hub Mitte: Position in welcher die Handhabungseinrichtungen auf den Konen abgelegt sind.
Hub unten: Ablegen von Handhabungseinrichtungen / Materialträgern / Boxen direkt auf dem Boden.

Weiterhin kann die Hubbewegung auch dazu genutzt werden, die Transporteinrichtung 100 auf einer Ladestation (hier nicht gezeigt) anzudocken und dort den Aufladevorgang zu ermöglichen.

Weiterhin kann die Handhabungseinrichtung durch die Transporteinrichtung 100 temporär direkt an die Werkzeugmaschine 1000 übergeben werden. Die Handhabungseinrichtung wird dabei über die in den konischen Aufnahmen 1051 integrierte Schnittstelle (siehe hierzu auch Fig. 4b und 4c) zur Herstellung einer Verbindung von der Werkzeugmaschine 1000 versorgt und die Transporteinrichtung 100 kann weitere Aufgaben und andere Handhabungseinrichtungen übernehmen. In diesem Fall dient die Transporteinrichtung 100 als Zubringer von temporären Handhabungseinrichtungen für verschiedene Werkzeugmaschinen 1000.

Fig. 4b zeigt schematisch eine weitere Ausführungsform der Transporteinrichtung 100 ohne aufgenommene Kühlmittelaustausch-, Kühlmittelzuführ- oder Kühlmittelabsaugmoduleinheit bei einer Positionierung und Energie- und/oder Signalverbindungsschluss mittels konischer Aufnahmen 1051.

Dabei sind konische Aufnahmen 1051 der Werkzeugmaschine gezeigt, wobei diese, neben dem Positionieren der Transporteinrichtung 100, wenn diese sich mittels ihrer Hubzylinder (siehe hierfür Fig. 5) über den konischen Aufnahmen 1051 absenkt, eine Verbindung schließen können, über diese zum Beispiel Energie und/oder Signale zur Steuerung bzw. Überwachung der Transporteinrichtung 100 an die Transporteinrichtung 100 und umgekehrt von der Transporteinrichtung 100 an die Werkzeugmaschine 1000 übertragen werden können.

Durch die konischen Aufnahmen 1051 könnte beispielsweise, wie hier gezeigt, die Palette 300 oder aber eine beliebige Handhabungseinrichtung präzise an der Werkzeugmaschine 1000 positioniert werden und, und das ist im besonderen Maße vorteilhaft, eine Steuerung der Transporteinrichtung 100 bzw. der aufgenommenen Palette 300 erfolgen, ohne dabei den internen Energiespeicher (hier nicht gezeigt) der Transporteinrichtung 100 zu belasten, da die Energie seitens der Werkzeugmaschine 1000 bereitgestellt und über die beschriebene Verbindung in die Transporteinrichtung 100 eingespeist wird.

Ferner kann die Transporteinrichtung 100 über eine Art Ladestation verfügen, an der es seine Energiequellen (Energiespeicher 30; hier nicht gezeigt) auffüllen oder erneuern kann. Dies kann beispielsweise durch das Andocken an den konischen Aufnahmen 1051 erfolgen.

Fig. 4c zeigt schematisch eine weitere Ausführungsform der Transporteinrichtung 100 ohne aufgenommene Kühlmittelaustausch-, Kühlmittelzuführ- oder Kühlmittelabsaugmoduleinheit, bei der ein Palettenhalter 350 mit einer Palette 300 mittels einer Transporteinrichtung 100 an eine Palettenhalteraufnahme 1040 andockt. Dabei kann die Palettenhalteraufnahme 1040 beispielsweise an der Werkzeugmaschine 1000 vorgesehen sein.

Insbesondere unterscheidet sich diese Ausführungsform von der in Fig. 4a gezeigten dadurch, dass der Palettenhalter 350 (oder eine andere Einrichtung, die durch die Transporteinrichtung 100 transportiert wird/werden kann) durch eine Bewegung der Transporteinrichtung 100 in der horizontalen Ebene an der Palettenhalteraufnahme 1040 angedockt wird.

Das Andocken kann beispielsweise mittels konischer Aufnahmen 1051 (hier beispielsweise Spannkonen) an der Palettenhalteraufnahme 1040 oder an dem Palettenhalter 350 und entsprechend ausgebildeten konischen Vertiefungen 355 an dem Palettenhalter 350 oder an der Palettenhalteraufnahme 1040 erfolgen. Die bereits beschriebenen Vorteile wie der Ausrichtung/Zentrierung des Paletten halters 350 gegenüber der Palettenhalteraufnahme 1040 ergeben sich durch die konischen Aufnahmen 1051/ konischen Vertiefungen 355 auch hier.

Nach erfolgtem Andocken des Palettenhalters 350 (oder einer anderen Einrichtung, die durch die Transporteinrichtung 100 transportiert wird/werden kann) kann sich die Transporteinrichtung 100 beispielsweise wieder von der transportierten Einrichtung (hier Palettenhalter 350) abkoppeln und für eine andere Transportaufgabe verwendet werden.

Ferner kann der Palettenhalter 350, wie beispielsweise auch bei der Transporteinrichtung 100 selbst oder bei der Handhabungseinrichtung, eine Schnittstelle 357 zur Übertragung von mechanischer Energie und/oder elektrischer, hydraulischer und/oder pneumatischer Energie zwischen der Palettenhalteraufnahme 1040 und dem Palettenhalter 350 aufweisen. Entsprechend kann die Palettenhalteraufnahme 1040 ein Gegenstück (Schnittstelle 358) zur Schnittstelle 357 des Palettenhalters 350 aufweisen.

Ferner könnten aber auch beispielsweise Betriebsmittel wie Kühl-Schmierstoff von der Palettenhalteraufnahme 1040 dem Palettenhalter 350 zugeleitet werden. Hierfür können beispielsweise entsprechende Befestigungsmittel und elektrische und/oder Fluide leitende Anschlüsse (vergleichbar den Befestigungsmitteln und Anschlüssen 43) vorgesehen sein.

Zudem kann in vorteilhafter Weise die Schnittstelle 357 eine Einrichtung zur kontaktlosen Übertragung von Signalen zwischen der Palettenhalteraufnahme 1040 der Werkzeugmaschine 1000 (oder einer anderen Vorrichtung) und dem Palettenhalter 350 aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 357 oder auch außerhalb der Schnittstelle 357 vorgesehen sein, wobei in vorteilhafter Weise die Einrichtung zur kontaktlosen Signalübertragung zentral/mittig in der Schnittstelle 357 vorgesehen ist.

Es sei an dieser Stelle jedoch darauf hingewiesen, dass die als Palettenhalteraufnahme 1040 bezeichnete Aufnahme an der Werkzeugmaschine 1000 aber auch eine Vielzahl anderer Vorrichtungen, Handhabungseinrichtungen oder dergleichen, oder auch die Transporteinrichtung 100 selbst durch Andocken aufnehmen kann. Die Palettenhalteraufnahme 1040 ist damit nicht auf die Aufnahme von Palettenhaltern 350 beschränkt.

Ferner sei darauf hingewiesen, dass in besonders bevorzugter Weise die für das Andocken beschriebene Aufnahme (mit konischen Aufnahmen 1051, konischen Vertiefungen 355, und Schnittstellen 357/358) mit der Aufnahmevorrichtungen 40 (siehe Fig. 2) einheitlich bzw. standardisiert ausgeführt ist, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Fig. 4d zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Palettenhalter 350.

Dabei weist die Transporteinrichtung 100 einen Palettenhalter 350 auf, der nicht von einer Werkzeugmaschine 1000 (oder von einem Rüstplatz, Magazinplatz etc.) aufgenommen werden kann und stets auf der Transporteinrichtung 100 verbleibt.

Dieser Palettenhalter 350 ist dazu eingerichtet, eine Palette 300 auf eine Aufnahme 1040 der Werkzeugmaschine 1000 zu setzen, in dem die Palette 300 durch die Transporteinrichtung 100 (in angehobenem Zustand) über der Aufnahme 1040 positioniert wird und dann die Transporteinrichtung 100 abgesenkt wird, bis die Palette 300 von der Aufnahme 1040 aufgenommen ist.

Bereits beim Positionieren der Palette 300 über der Aufnahme 1040 wird eine Ausrichtung (Vorzentrierung) der Palette 300 gegenüber der Aufnahme 1040 durch Ausrichtelemente 301, die sich an der Palette 300 befinden, vorgenommen. Diese Ausrichtelemente 301 werden bei der Positionierung der Palette 300 über der Aufnahme 1040 gegen eine Zentriervorrichtung 1045 gedrückt, so dass die Palette 300 vollständig an der Zentriervorrichtung 1045 anliegt. Wird nun die Palette 300 durch die Transporteinrichtung 100 weiter abgesenkt, so fädelt sich die Zentriervorrichtung 1045 in die Ausrichtelemente 301 ein (da diese beispielsweise eine V-förmige Aussparung aufweisen), so dass auch ein seitlicher Versatz der Palette 300 in Relation zur Aufnahme 1040 ausgeglichen wird. Hierdurch ist die Palette 300 gegenüber der Aufnahme 1040, und insbesondere gegenüber den Konen (hier Palettenkonen 1044), vorzentriert.

Beispielsweise kann die Palette 300 selbst auf dem Palettenhalter 350 (der beispielsweise gabelförmig ausgestaltet sein kann) durch ein Druckstück (hier nicht gezeigt) in Richtung der Ausrichtelemente 301 vorgespannt auf der Gabel aufliegen. Diese Vorspannung kann beispielsweise dazu vorteilhaft genutzt werden, dass die Palette 300 auf der Gabel des Palettenhalters 350 gesichert/fixiert ist.

Wird die Palette 300 bzw. die Ausrichtelemente 301 gegen die Zentriervorrichtung 1045 der Aufnahme 1040 gedrückt (durch die Positionierbewegung der Transporteinrichtung 100), so drückt es das Druckstück weiter zusammen und die Fixierung der Palette 300 gegenüber der Gabel löst sich. So kann ein Absetzen der Palette 300 auf der Aufnahme 1040 erfolgen.

Fig. 5a zeigt schematisch eine Ausführungsform der Transporteinrichtung 100 ohne aufgenommene Kühlmittelaustausch-, Kühlmittelzuführ- oder Kühlmittelabsaugmoduleinheit mit einer Höhenverstellung der Transporteinrichtung 100 mittels Hubzylindern 50.

Dabei wird das Fahrgestell 10 durch die Hubzylinder 50 gegenüber den Rädern angehoben, so dass auch die aufgenommenen Handhabungseinrichtungen in ihrer Höhe relativ zu den Rädern 20 bzw. zu der Werkzeugmaschine 1000 (hier nicht gezeigt) verändert werden.

Fig. 5b zeigt schematisch eine weitere Ausführungsform der Transporteinrichtung 100 ohne aufgenommene Kühlmittelaustausch-, Kühlmittelzuführ- oder Kühlmittelabsaugmoduleinheit mit einer Höhenverstellung der Transporteinrichtung mittels Hubzylindern 50.

Hierin soll eine Alternative gezeigt werden, bei der neben den Hubzylindern 50 ferner ein Fahrwerk 60 (z.B. auf Basis eines Hebelmechanismus) vorgesehen ist, um das Fahrgestell 10 der Transporteinrichtung gegenüber den Rädern 20 herauszuheben, so dass auch die mitgeführten Handhabungseinrichtungen in ihrer Höhe verändert werden.

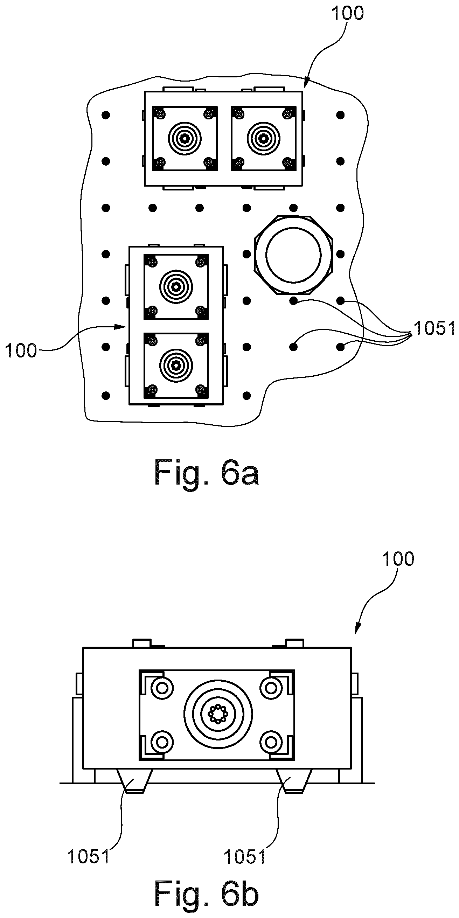

Fig. 6a zeigt schematisch einen Hallenboden mit rasterförmig angeordneten Konen 1051 zur Positionierung der Transporteinrichtungen 100 bzw. der Handhabungseinrichtungen.

Dabei können, wie bereits anhand von Fig. 4 erläutert, die Transporteinrichtung 100 abgesenkt werden, so dass entweder die Transporteinrichtung 100 selbst oder aber die von der Transporteinrichtung 100 aufgenommene Handhabungseinrichtung mittels der Konen 1051 positioniert wird.

Eine weitere Möglichkeit besteht darin, die Konen 1051 versenkbar auszugestalten, wenn beispielsweise die Konen 1051 für die Bewegungen der Transporteinrichtungen 100 auf dem Hallenboden störend sind. Hierfür müssten die Konen 1051 über eine eigene Hubvorrichtung (beispielsweise pneumatisch, hydraulisch, elektrisch oder mechanisch) verfügen, damit sie aus dem Hallenboden herausgehoben oder darin versenkt werden können. Zudem könnte ferner eine kombinierte Hubbewegung der Konen 1051 und der Transporteinrichtung 100 erfolgen, um die Positionierung durchzuführen.

Fig. 6b zeigt eine weitere Möglichkeit, die Konen 1051 an der Unterseite der Transporteinrichtung 100 vorzusehen und lediglich in dem Hallenboden entsprechende Vertiefungen für die Konen 1051 vorzusehen.

Hierdurch könnte nun die Hubbewegung durch die Transporteinrichtung 100 oder die Aufnahmevorrichtung 40 erfolgen, um die Positionierung durchzuführen. Ferner kann es aber auch möglich sein, dass die Konen 1051 am Unterboden der Transporteinrichtung 100 in die Vertiefungen des Hallenbodens abgesenkt werden, um eine Positionierung der Transporteinrichtung 100 bzw. der Handhabungseinrichtung zu ermöglichen.

In diesen Fällen ist keine Störkontur mehr auf dem Hallenboden vorhanden, so dass die Transporteinrichtungen 100 uneingeschränkt über den Hallenboden fahren könnten. Zudem kann bei der Ausführungsform, wie in Fig. 6b gezeigt, auf eine zusätzliche Hubvorrichtung (beispielsweise für die Konen am Hallenboden) verzichtet werden.

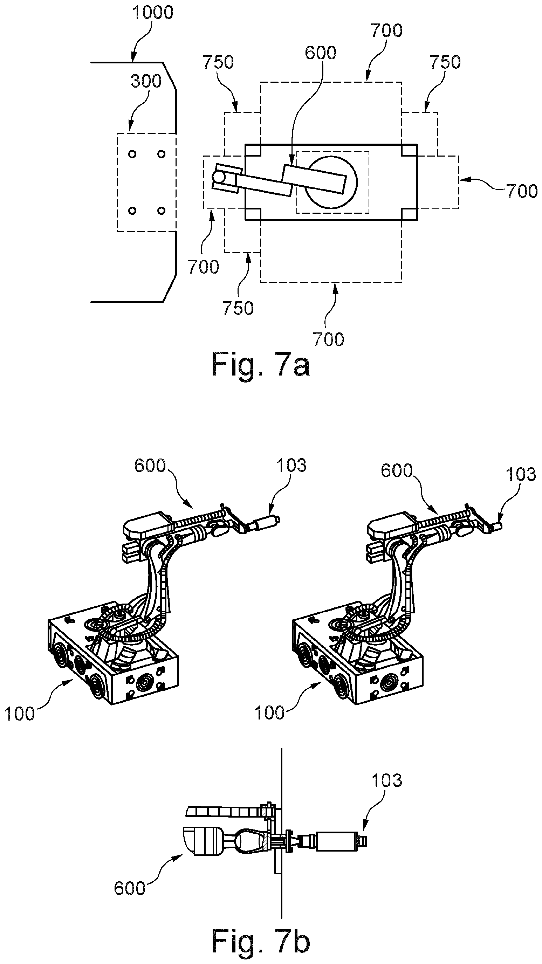

Fig. 7a zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Industrieroboter 600 als Handhabungseinrichtung.

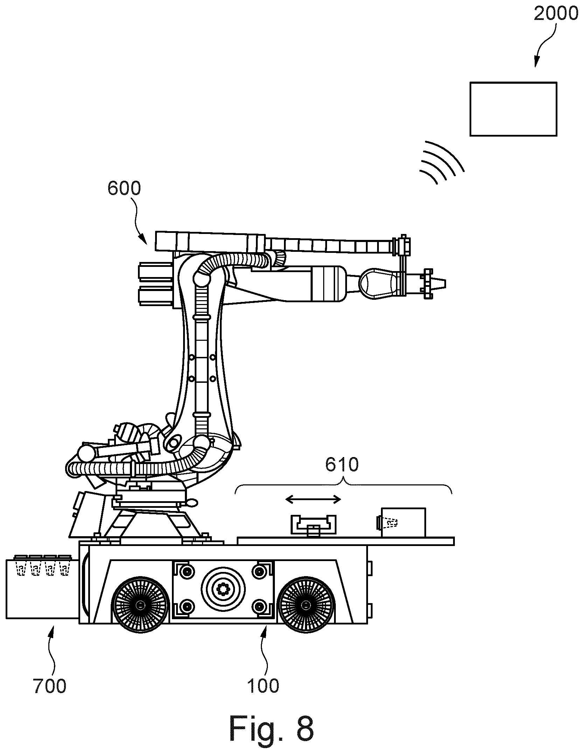

Neben bzw. statt eines Palettenwechslers 200 als Handhabungseinrichtung kann auch ein Roboter 600 (Industrieroboter) durch die Aufnahmevorrichtungen 40 der Transporteinrichtung 100 aufgenommen werden. Dieser kann für die verschiedensten Aufgaben innerhalb des Produktionsprozesses genutzt werden und je nach Anwendungsfall weiter angepasst werden. Weitere Beispiele hierzu sind in den Figuren 8 bis 13 und 20 beschrieben.

Zudem ist es von Vorteil, dass die Transporteinrichtung 100 über eine Vielzahl von Aufnahmevorrichtungen 40 verfügt, wobei an jeder Aufnahmevorrichtung 40 unterschiedliche Module / Handhabungseinrichtungen aufgenommen werden können.

Wie in Fig. 7a gezeigt können verschiedene Material-Paletten 700, Maschinenpaletten 700 oder Gitterboxen 700 durch die Transporteinrichtung 100 aufgenommen werden. Ferner können verschiedenste Hilfsmodule 750 (wie z.B. Entgrater, Aufbewahrungsbox für Werkzeuge, Wechselgreifer, etc.) von der Transporteinrichtung 100 aufgenommen werden, die der Roboter 600 nutzen kann, um z.B. Bestückungsarbeiten an der Werkzeugmaschine 1000 oder Nachbearbeitungen an einem Werkstück 1 durchzuführen, welches durch die Werkzeugmaschine 1000 gefertigt wurde.

Es sei an dieser Stelle zudem explizit darauf hingewiesen, dass die Transporteinrichtung 100 auch als reiner Material-Zulieferer bzw. Werkzeug-Zulieferer ausgestattet sein kann, beispielsweise als eine Art Werkstück-/Werkzeugwagen, der ausschließlich mit einer oder mehreren Material-Paletten 700 und/oder Werkzeugpaletten und/oder Gitterboxen 700 ausgestattet ist und entsprechend Bearbeitungsstationen oder andere Bestimmungsorte der Werkstücke/Werkzeuge dadurch anfahren kann.

Durch die Möglichkeit, einen Palettenwechsler 200 und einen Roboter 600 auf einer Transporteinrichtung 100 aufnehmen zu können, können in vorteilhafter Weise Werkstück- und Paletten-Handling beliebig kombiniert werden und auf Gegebenheiten in der Produktionskette individuell eingegangen werden.

Fig. 7b zeigt nun schematisch zwei konkretere Ausführungsbeispiele der Transporteinrichtung 100 ohne aufgenommene Kühlmittelaustausch-, Kühlmittelzuführ- oder Kühlmittelabsaugmoduleinheit, sondern exemplarisch mit aufgenommenen Robotern 600, wobei beide Roboter 600 sowohl für Werkzeug-Handling als auch für Werkstück-Handling eingerichtet sind. Insbesondere kann für das Bewegen von Werkzeugen 102 beispielsweise ein Werkzeugwechsler von dem Roboter 600 aufgenommen sein (siehe beispielsweise auch die Detailansicht in Fig. 7b). Dieser könnte beispielsweise auch das Werkzeug 102 in der Arbeitsspindel 1100 der Werkzeugmaschine 1000 wechseln.

Fig. 8 zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Industrieroboter 600 und einer Vermessungseinheit 610 zur Werkzeugprüfung.

Durch die in Fig. 8 gezeigte Konfiguration der Transporteinrichtung 100 mit einem Roboter 600 und einer Vermessungseinheit 610 zur Werkzeugprüfung sowie einem Modul 700 mit Pufferplätzen für die Werkzeuge kann die Transporteinheit 100 die Werkzeuge aus einer Werkzeugmaschine 1000 (hier nicht gezeigt) entnehmen, vermessen und prüfen.

Dabei kann die Prüfung taktil oder auch berührungslos erfolgen. Eine Schreib- und Leseeinheit kann ferner das Werkzeug identifizieren und entsprechend zuordnen.

Per Funksignale können nun die erhaltenen Informationen sowie die Ergebnisse der Prüfung an eine Leitrechnersteuerung 2000 übermittelt werden und entsprechend weiterverarbeitet werden.

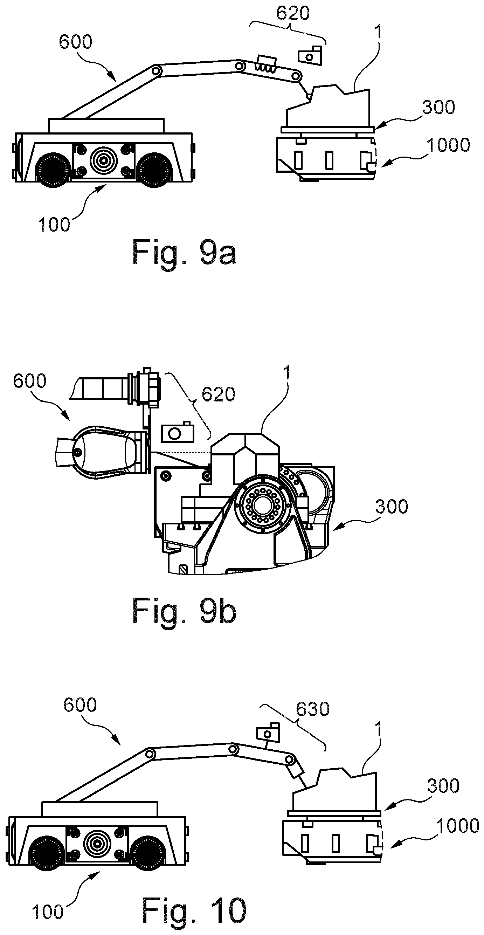

Fig. 9a zeigt schematisch eine Detailansicht einer weiteren Ausführungsform der Transporteinrichtung 100 ohne aufgenommene Kühlmittelaustausch-, Kühlmittelzuführ- oder Kühlmittelabsaugmoduleinheit, sondern exemplarisch mit einem Industrieroboter 600 und Mess- und Prüfmitteln 620 zur Prüfung von Bauteilen 1, die auf einer Werkzeugmaschine 1000 (hier mir Palette 300) gefertigt wurden, wie dies im Detail auch noch einmal in Fig. 9b dargestellt ist.

Dabei kann das Bauteil 1 durch den Roboter 600 sowohl taktil als auch scannend geprüft werden. Ferner kann eine optische Einheit das Bauteil 1 über ein optisches Verfahren prüfen.

Die erhaltenen Daten und Informationen können nun wieder per Funk, per Induktion oder aber durch entsprechende Anschlüsse / Verbindungen in den konischen Aufnahmen (hier nicht gezeigt) übertragen werden.

Fig. 10 zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Industrieroboter 600 und einem Aufsatz 630 zur Nachbearbeitung von Bauteilen 1, die auf einer Werkzeugmaschine 1000 (hier mit Palette 300) gefertigt wurden.

Dabei kann der Aufsatz 630 über ein Werkzeug (z.B. eine Bürste oder einen Entgrater) verfügen, mit dem das Bauteil automatisiert nachbearbeitet werden kann. Eine optische bzw. sensorische Überwachung stellt dabei die entsprechende Qualität des fertigen Bauteils 1 sicher und überprüft, ob weitere Nacharbeiten nötig sind.

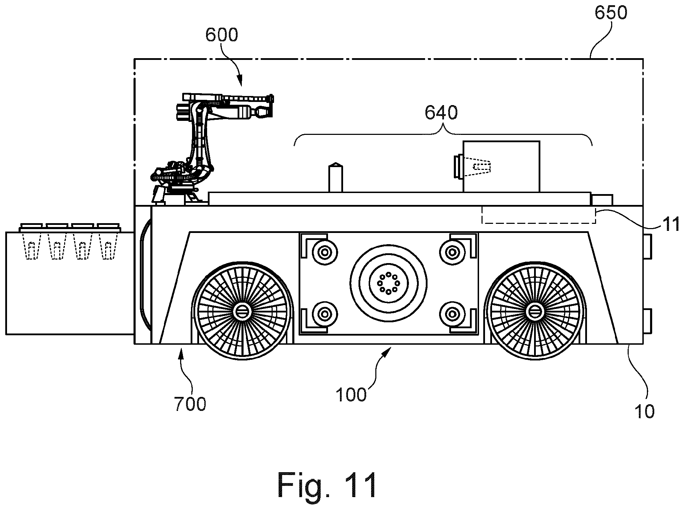

Fig. 11 zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Industrieroboter 600 und einer Einheit 640 zum Schärfen und Abrichten von Werkzeugen.

Dabei weist die Transporteinrichtung 100 neben dem Roboter 600 und der Einheit 640 zum Schärfen und Abrichten von Werkzeugen ferner auch eine Schutzumbauung 650 auf, mit dieser die Umgebung vor umherfliegenden Spänen, die durch den Schärfungs- bzw. Abrichtprozess entstehen, geschützt wird. In vorteilhafter Weise kann (wie an der linken Seite der Schutzumbauung 650 angedeutet) eine Klappe vorgesehen sein, durch die der Roboter durchgreifen und zum Beispiel mit einer Arbeitsspindel einer Werkzeugmaschine (beide hier nicht gezeigt) interagieren kann.

Da es sich bei dem Schärfe- und Abrichtprozess um spanabhebende Bearbeitungsschritte handelt, ist es von Vorteil, wenn das Fahrgestell 10 zudem über einen internen Kühl-Schmierstofftank 11 verfügt, um entsprechend, wie bei einer Werkzeugmaschine üblich, den spanabhebenden Bearbeitungsprozess zu kühlen und zu schmieren und den Werkzeugverschleiß damit zu reduzieren. Weiterhin kann es vorteilhaft sein, an der Transporteinrichtung 100 zudem ein Modul 700 mit Pufferplätzen für die Ablage von Werkzeugen vorzusehen.

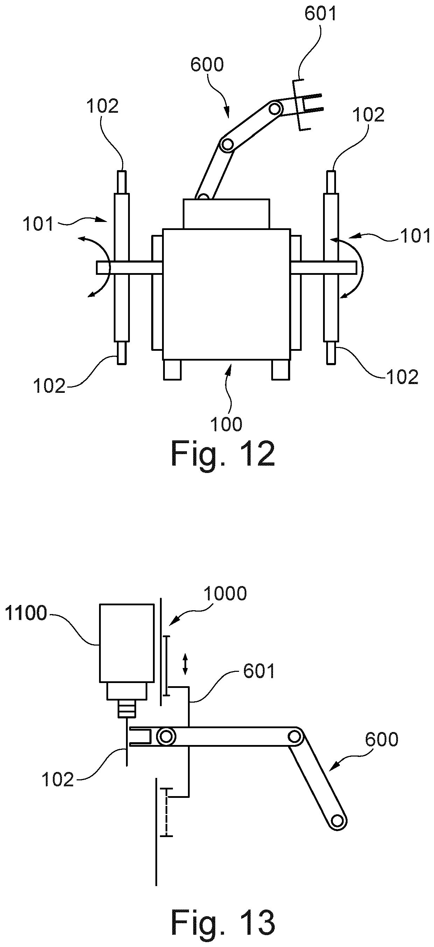

Fig. 12 zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Industrieroboter 600 und einem Magazin 101 zur Mitführung von verschiedenen Werkzeugen 102.

Hierdurch können Werkzeuge 102 direkt in eine Arbeitsspindel der Werkzeugmaschine (hier nicht gezeigt) oder ins Magazin 101 eingewechselt werden. Dabei kann das Magazin 101 als Rad-, Turm-, Teller- oder Kettenmagazin ausgeführt sein. Weitere Varianten von Magazinen 101 sind aber ebenso anwendbar.

Insbesondere können auch, statt oder neben einem Magazin 101 für das Ablegen von Werkzeugen 102, Werkzeugpaletten (hier nicht gezeigt) von der Transporteinrichtung 100 aufgenommen werden und entsprechend für die verschiedensten Anwendungen genutzt werden.

Dabei sei ausdrücklich darauf hingewiesen, dass ein oder mehrere Werkzeugpaletten auch unabhängig vom Vorhandensein eines Industrieroboters 600 von der Transporteinrichtung 100 aufgenommen und entsprechend ihren Bestimmungsorten zugeführt werden können.

In besonders vorteilhafter Weise kann der Roboter 600 mit einem Verschlussblech 601 versehen werden, um die Sicherheit während eines Werkzeugwechsel an einer Arbeitsspindel 1100 der Werkzeugmaschine 1000 (wie in Fig. 13 gezeigt) zu gewährleisten.

Fig. 13 zeigt schematisch die Ausführungsform der Transporteinrichtung 100 in Fig. 12 bei der Interaktion von dem Industrieroboter 600 mit der Arbeitsspindel 1100 der Werkzeugmaschine 1000, um beispielsweise das Werkzeug 102 zu wechseln.

Dabei wird noch einmal gezeigt, welchen Vorteil das Verschlussblech 601 bietet, um die Sicherheit an der Werkzeugmaschine 1000 während des Werkzeugwechsels zu gewährleisten.

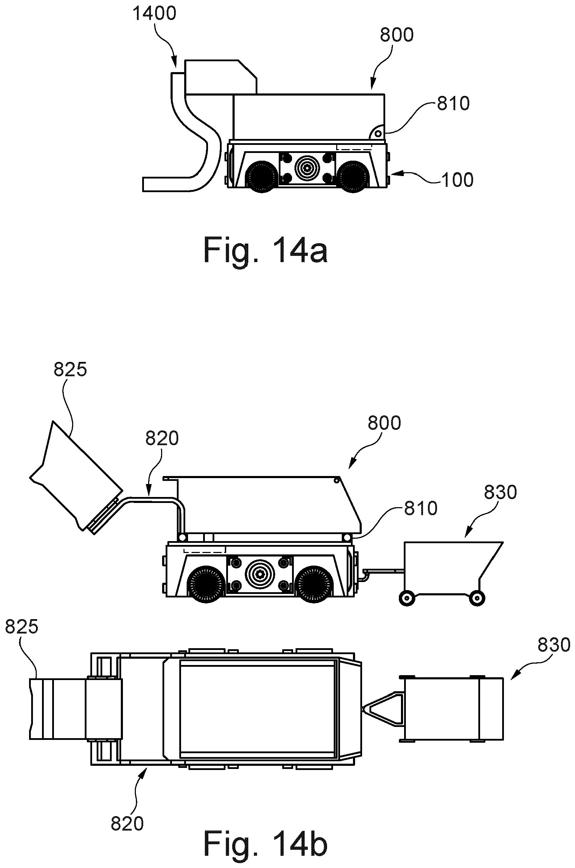

Fig. 14a zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch zur Späneentsorgung mit einem Spänewagen 1400.

Dabei wird ein Modul 800 zum Auffangen der Späne auf die Transporteinrichtung 100 montiert, wobei das Modul 800 ferner über einen Kippmechanismus 810 verfügt, um die eingesammelten Späne an einem definierten Ort wieder abzuladen.

Der Kippmechanismus kann dabei verschiedenartig ausgestaltet sein. Es können sowohl elektrische, als auch hydraulische oder pneumatische Antriebe vorgesehen sein. Es können ferner zum Erzeugen der Kippbewegung des Moduls 800 Zahnstangengetriebe, Schraubengetriebe oder einfach entsprechende pneumatische oder hydraulische Hubzylinder verwendet werden. Es können jedoch auch andere Antriebe / Getriebe in verschiedenen Kombinationen miteinander verwendet werden.

Eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit dem Modul 800 zum Auffangen der Späne ist dabei in Fig. 14b gezeigt, wobei hier ferner die Transporteinrichtung 100 mit einem Hebemechanismus 820 versehen ist, der einen mit Spänen befüllten Spänebehälter 825 heben und in das Modul 800 entleeren kann. Hierbei kann nun in vorteilhafter Weise der Spänebehälter 825 so lange an dem Spänewagen 1400 der Werkzeugmaschine 1000 verweilen, bis dieser entsprechend befüllt ist und eine Information ergeht, beispielsweise an die zentrale Leitrechnersteuerung 2000, die daraufhin die Transporteinrichtung 100 mit dem Modul 800 und dem Hebemechanismus 820 losschickt, um den besagten Spänebehälter 825 zu entleeren.

Zusätzlich kann die Transporteinrichtung 100 ferner dazu eingerichtet sein, einen zusätzlichen Behälterwagen 830 anzukoppeln und diesen für das Auffangen und Transportieren von Spänen zusätzlich zu nutzen.

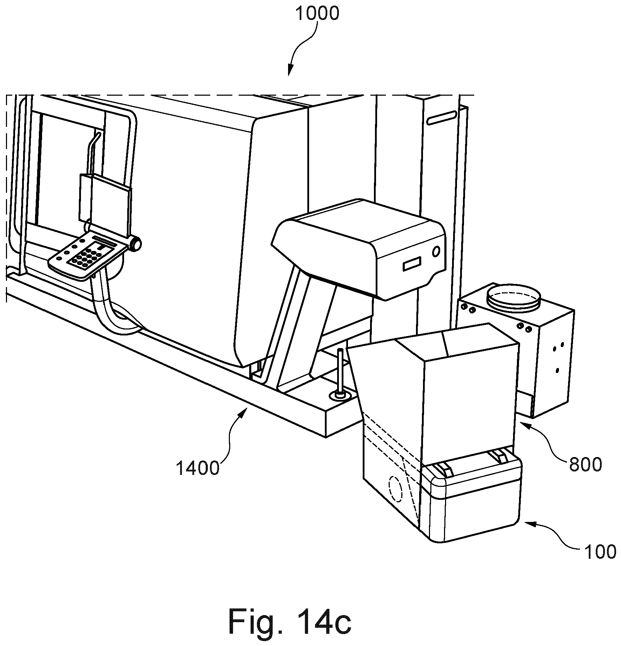

Fig. 14c zeigt eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit dem Modul zum Auffangen der Späne 800, wie bereits in Fig. 14a und 14b gezeigt, das auf der Oberseite der Transporteinrichtung 100 aufgenommen ist. In vorteilhafter Weise kann das gezeigte Modul 800 durch zwei seitlich vorhandene Aufstell-Abschnitte an den verschiedensten Spänewagen/Spänesammlern 1400 abgestellt werden. Ist der Spänewagen 800 entsprechend befüllt worden, kann das Signal an die Transporteinrichtung 100 ergehen, das Modul 800 erneut aufzunehmen und die Späne einer Weiterbehandlung und/oder Entsorgung zuzuführen.

Für die Positionierung des Moduls 800 an dem Spänewagen 1400 durch die Transporteinrichtung 100 können beispielsweise wieder in/auf dem Hallenboden vorhandene konenförmige Aufnahmen 1051 genutzt werden. Weiterhin können die konenförmigen Aufnahmen 1051 auch die bereits in den Figuren 4a und 4c beschriebenen Eigenschaften aufweisen.

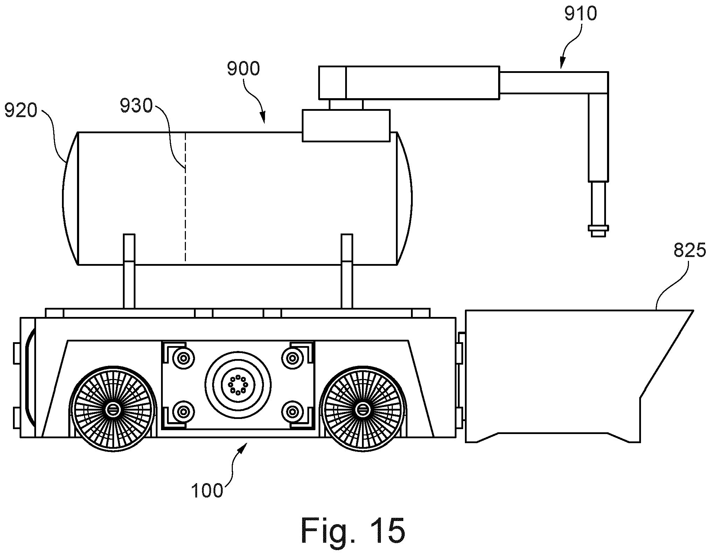

Fig. 15 zeigt schematisch eine weitere Ausführungsform der Transporteinrichtung 100 zur Aufbereitung und Wiederbefüllung einer Werkzeugmaschine 1000 mit Kühl-Schmierstoff.

Dabei weist die Transporteinrichtung 100 ein Modul 900 zum Auffangen bzw. Absaugen des gebrauchten Kühl-Schmierstoffes aus der Werkzeugmaschine auf, wobei das Modul 900 ferner einen Tank 920 und einen Filter 930 zur Aufbereitung des gebrauchten Kühl-Schmierstoffes aufweisen kann. Eine Absaugvorrichtung 910 kann dabei direkt mit der Werkzeugmaschine 1000 verbunden werden und den gebrauchten Kühl-Schmierstoff in den Tank 920 absaugen. Ferner kann die Absaugvorrichtung 910 aber auch dazu eingerichtet sein, Kühl-Schmierstoff, der sich in dem Spänebehälter 825 angesammelt hat, wieder aus dem Spänebehälter 825 abzusaugen und der Aufbereitung zuzuführen.

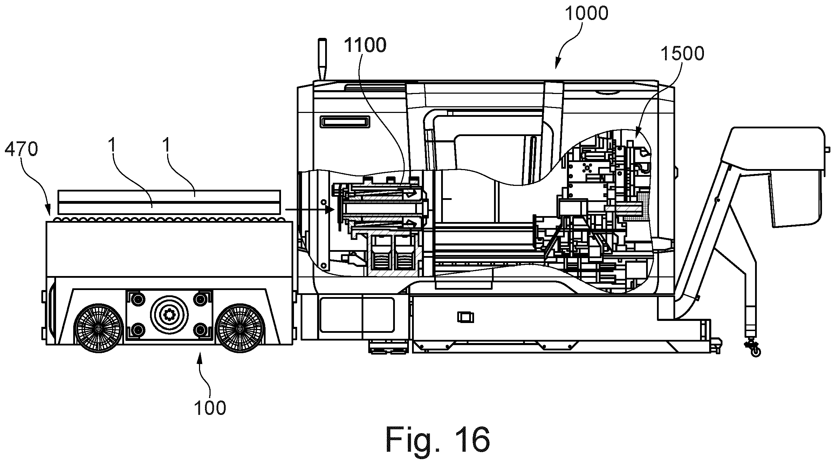

Fig. 16 zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch zur Bereitstellung und Einführung von Werkstücken 1 in eine Werkzeugmaschine 1000 für Drehbearbeitung.

Dabei kann es sich bei den Werkstücken 1 beispielsweise um Stangenmaterial handeln, welche durch einen von der Transporteinrichtung 100 aufgenommenen Stangenlader 470 der drehbearbeitenden Werkzeugmaschine 1000 zugeführt werden.

Für das ordnungsgemäße Zusammenspiel von Stangenlader 470 und der Werkzeugmaschine 1000, insbesondere der Arbeitsspindel 1100, empfiehlt es sich, die Transporteinrichtung 100 wieder durch die bereits beschriebenen konischen Aufnahmen 1051 (hier nicht gezeigt), die an entsprechender Stelle an der Werkzeugmaschine 1000 vorgesehen sind, positionieren zu lassen.

So ist gewährleistet, dass das Stangenmaterial (Werkstücke 1) korrekt in die Werkzeugmaschine 1000 bzw. in die Arbeitsspindel 1100 eingelegt wird und so der automatisierte Fertigungsprozess reibungslos vonstattengehen kann.

Wie in der Fig. 16 gezeigt, kann die Werkzeugmaschine 1000 ferner mit einem Werkzeugrevolver 1500 ausgestattet sein, welcher das jeweils für den entsprechenden Bearbeitungsschritt notwendige Werkzeug zu dem sich drehenden Stangenmaterial zustellen kann. Darüber hinaus können die konischen Aufnahmen 1051 ferner wieder über die bereits beschriebenen Möglichkeiten zur Herstellung einer Verbindung für Energie- und/oder Signalübertragung verfügen, so dass der Energiespeicher 30 (hier nicht weiter dargestellt) der Transporteinrichtung 100 nicht weiter durch den Prozess der Materialzuführung belastet wird.

Fig. 17a zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit Materialspeicher 700 für eine Werkzeugmaschine 1000 mit Gantry-Lader 1600.

Dabei können die Materialspeicher 700 von verschiedenen Aufnahmevorrichtungen 40 der Transporteinrichtung 100 aufgenommen werden, was durch die beiden dargestellten Transporteinrichtungen verdeutlicht werden soll. Ferner kann aber auch eine der Transporteinrichtungen 100 die Rohteile für die Werkzeugmaschine 1000 bzw. dem Gantry-Lader 1600 bereitstellen, während die andere Transporteinrichtung 100 die bearbeiteten Teile / Werkstücke aufnimmt.

Durch diese Konfiguration des Teile- bzw. Materialhandlings können die autonomen Maschinenlaufzeiten erhöht werden, da nun der Transport der Rohteile und/oder der Fertigteile automatisch erfolgen kann.

Der Gantry-Lader 1600 weist einen Greifer 1610 auf, der beispielsweise entlang einer x- und einer z-Richtungverfahren werden kann und der die Rohteile der Arbeitsspindel 1100 zuführt, bis diese in der Werkstückaufnahme der Arbeitsspindel 1100 eingespannt sind. Auch hier kann wieder ein Werkzeugrevolver 1500 das Werkzeug zu dem Rohteil / Werkstück zustellen, welches für den aktuellen Bearbeitungsprozess benötigt wird.

Diese Ausführungsform der Transporteinrichtung 100 eignet sich jedoch nicht nur für Drehmaschinen, sondern kann ebenso für bekannte Fräsmaschinen verwendet werden.

Ferner ist diese Ausführungsform der Transporteinrichtung 100 dahingehend besonders von Vorteil, da ein Großteil der Gantry-Lader, die bereits an einer Werkzeugmaschine 1000 zum Einsatz kommen, ohne größeren Aufwand auf die Transporteinrichtungen 100 für Materialhandling adaptiert werden können.

Fig. 17b zeigt eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit Materialspeicher 700 für eine Werkzeugmaschine 1000 mit Roboter 600 zum Ein- und Auswechseln von Werkstücken in die Werkzeugmaschine 1000.

Dabei kann, wie dies auch bereits in Fig. 4c beschrieben ist, die Transporteinrichtung 100 mit der Handhabungseinrichtung bzw. in diesem Fall mit einem von der Transporteinrichtung 100 aufgenommenen Modul 700 (hier Speicher für Rohmaterial) an der Werkzeugmaschine 1000 andocken (mittels konenförmiger Aufnahmen 1051 und Schnittstelle 358).

Weiterhin kann nun die Transporteinrichtung 100 gegebenenfalls den Materialspeicher 700 zunächst an der Werkzeugmaschine 1000 "absetzen", um anderen Aufgaben zur Verfügung zu stehen. Erst wenn das in dem Materialspeicher 700 vorgehaltene Rohmaterial aufgebraucht ist müsste die Transporteinrichtung 100 zurückkommen und das Modul 700 erneut aufnehmen und entsprechend abtransportieren.

In vorteilhafter Weise stehen hierfür der Werkzeugmaschine 1000 mindestens einer, in besonders vorteilhafter Weise jedoch mindestens zwei Andock-Plätze zur Verfügung. Damit kann die Transporteinrichtung 100 einen neuen, mit Rohteilen gefüllten Materialspeicher 700 an der Werkzeugmaschine 1000 andocken und im Anschluss einen geleerten Materialspeicher 700 vom anderen Andock-Platz aufnehmen und entsprechend abtransportieren.

Das hier gezeigte Konzept der Werkzeugmaschine 1000 ist jedoch nicht darauf beschränkt, dass der Roboter 600 außerhalb der Werkzeugmaschine 1000 angeordnet ist, vielmehr kann der Roboter 600 auch im Arbeitsraum der Werkzeugmaschine 1000 vorgesehen sein und bei Bedarf aus der Werkzeugmaschine 1000 heraus in den angedockten Materialspeicher 700 für ein neues Rohteil greifen. Es können jedoch auch noch völlig andere Maschinenkonzepte mit der Transporteinrichtung 100 mit Materialspeicher 700 (oder einem anderen Modul 700) versorgt werden.

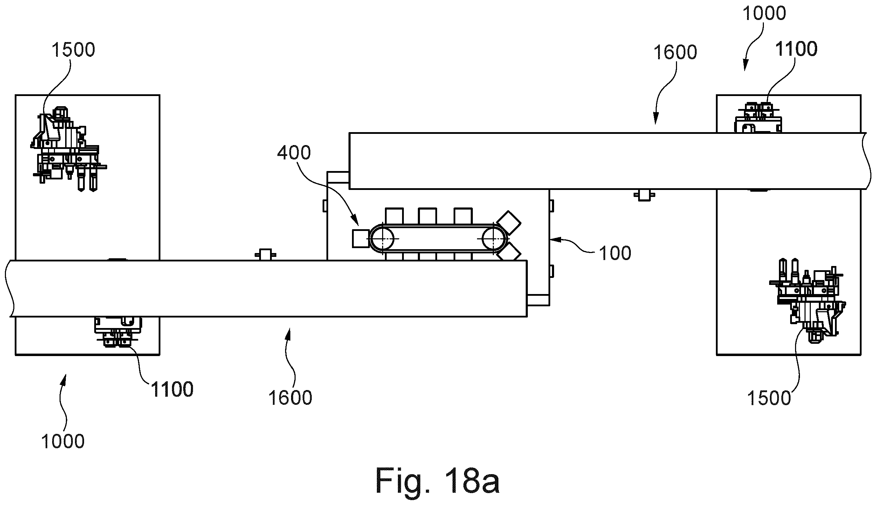

Fig. 18a zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit Förderband 400 zwischen zwei Werkzeugmaschinen 1000 mit Gantry-Ladern 1600. Ferner weisen die beiden Werkzeugmaschinen 1000 beispielhaft jeweils eine Arbeitsspindel 1100 und einen Werkzeugrevolver 1500 auf.

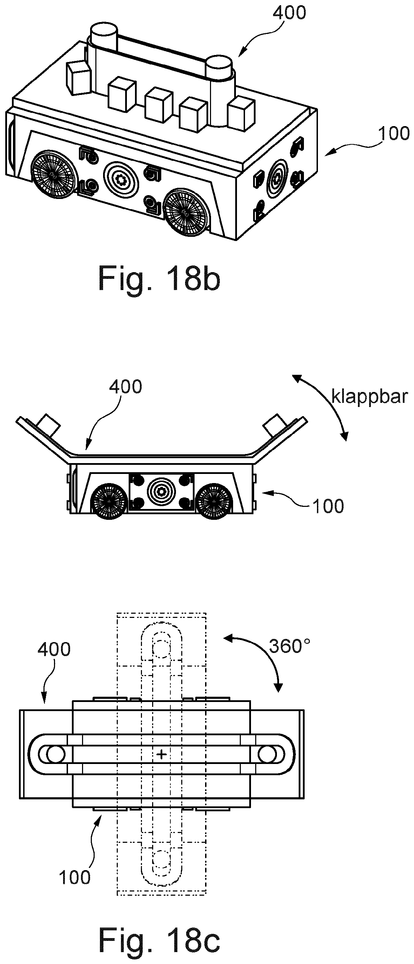

Dabei kann das von der Transporteinrichtung 100 aufgenommene Förderband 400 ferner mit Aufnahmen für Bauteile bzw. Werkstücke ausgestattet sein (siehe hierfür beispielsweise die Detaildarstellung in Fig. 18b). Zudem ist es in besondere Weise von Vorteil, dass die Transporteinrichtung 100 mit dem Förderband 400 als "stand alone"-Einheit genutzt werden kann, um zum Beispiel Rohteile oder bereits bearbeitet Werkstücke zwischen zwei Werkzeugmaschinen 1000 auszutauschen. Weiterhin ist es möglich, dass das Förderband bestimmte Bereiche für das Rüsten bereithält (Rüstplätze), durch die eine Bestückung des Förderbandes 400 mit Rohteilen / bearbeiteten Werkstücken erfolgen kann.

Zudem kann es besonders vorteilhaft sein, dass das Förderband 400 durch eine entsprechende Mechanik (hier nicht weiter gezeigt) an der Transporteinrichtung 100 angestellt (geklappt) werden kann (siehe hierfür beispielsweise Fig. 18c), um zum Beispiel größere Distanzen zu überbrücken. Hierfür können dann auch mehrere Transporteinrichtungen 100 mit Förderbändern 400 versehen sein, welche sich in Reihe anordnen, um beispielsweise eine Art Förderbrücke zu erzeugen.

Ferner sei an dieser Stelle darauf hingewiesen, dass die Ausführungsform des Förderbandes 400 nicht allein auf die gezeigte Ausführungsform beschränkt ist. Vielmehr können anstatt eines Förderbandes auch eine Art Förderkette oder dergleichen verwendet werden.

Ferner kann es auch möglich sein, dass das Förderband 400 gegenüber der Transporteinrichtung 100, die das Förderband aufgenommen und transportiert hat, drehbar gelagert ist, so dass eine Ausrichtung des Förderbandes 400 für den jeweiligen Einsatzzweck separat von der Positionierung der Transporteinrichtung 100 stattfinden kann (siehe hierfür Fig. 18c). Hierdurch konnte eine erhöhte Flexibilität für den Einsatz des Förderbandes 400 erzielt werden.

Fig. 19 zeigt schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch für die unterstützende Absaugung 420 des Arbeitsraumes einer Werkzeugmaschine 1000.

Hierfür ist es vorteilhaft, dass die Transporteinrichtung 100 eine entsprechende Absaugung 420 aufnehmen kann und sich entsprechend an einem Zugang in der Umhausung 1030 der Werkzeugmaschine 1000 positionieren kann, um entstehenden Schmutz und Verunreinigungen vor, während und nach einer spanenden Bearbeitung eines Werkstücks abzusaugen.

Dabei ist die Absaugung 420 vorrangig dafür gedacht, die häufig bereits in einer Werkzeugmaschine 1000 vorhandene Standard-Absaugung 1020 zu unterstützen. Sollte jedoch diese defekt oder gar nicht erst vorhanden sein, so kann die Absaugung 420 diese ersetzen. Der abgesaugte und aufgefangene Schmutz kann in einem Behälter gespeichert werden und bei Bedarf geleert werden.

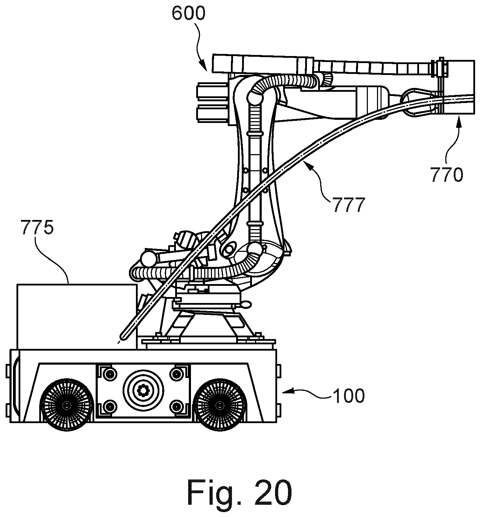

Fig. 20 zeigt nun schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit Roboter 600 und einer von dem Roboter 600 aufgenommenen Auftragvorrichtung 770.

Durch die Auftragvorrichtung 770 kann nun beispielsweise an einer Werkzeugmaschine 1000 ein Bauteil/Werkstück additiv gefertigt werden, da die Auftragvorrichtung 770 beispielsweise für das Auftragschweißen (oder ein anderes additives Fertigungsverfahren) eingerichtet ist. Hierfür kann beispielswiese die Transporteinrichtung 100 ferner einen Pulver- bzw. einen Medientank 775 aufnehmen, der das aufzubringende Material (beispielsweise Metallpulver etc.) speichert. Eine Zubringung bzw. Absaugung 777 zwischen dem Pulver- bzw. Medientank 775 und der Auftragvorrichtung 770 sorgt dafür, dass Material vom Pulver- bzw. Medientank 775 zur Auftragvorrichtung 770 geleitet oder aber beim Fertigungsprozess überschüssiges Material wieder abgesaugt und dem Pulver- bzw. Medientank 775 zugeführt werden kann.

Der Vorteil bei einer mobilen additiven Fertigung besteht darin, dass im Wesentlichen jede Werkzeugmaschine 1000 um eine solche additive Fertigung erweitert werden kann, ohne dass dabei ein Umbau der entsprechenden Werkzeugmaschine 1000 erfolgen muss. Weiterhin kann in vorteilhafter Weise zudem für die additive Fertigung die bereits an der Werkzeugmaschine 1000 vorhandene Maschinenkabine und/oder Absaugung als Schutz für den Fertigungsprozess und für die Bediener genutzt werden.

Es sei jedoch darauf hingewiesen, dass nicht zwingend eine Werkzeugmaschine 1000 vorhanden sein muss, damit die mobile additive Fertigung zum Einsatz kommen kann. Beispielsweise kann die Auftragvorrichtung 770 das gewünschte Bauteil/Werkstück auch auf einer beliebigen Unterlage oder in einer beliebigen Umgebung additiv erzeugen. Oder die Transporteinrichtung 100 kann zu dem bereits vorhandenen Werkstück/Bauteil fahren und bearbeitet dieses durch die aufgenommene Auftragvorrichtung 770 an Ort und Stelle.

Wie bereits weiter oben beschrieben, könnten beispielweise wieder Konen 1051 (hier nicht gezeigt) dazu verwendet werden, die Transporteinrichtung 100 optimal an der Werkzeugmaschine 1000 oder an dem Bauteil/Werkstück zu positionieren, um eine qualitative Fertigung zu gewährleisten.

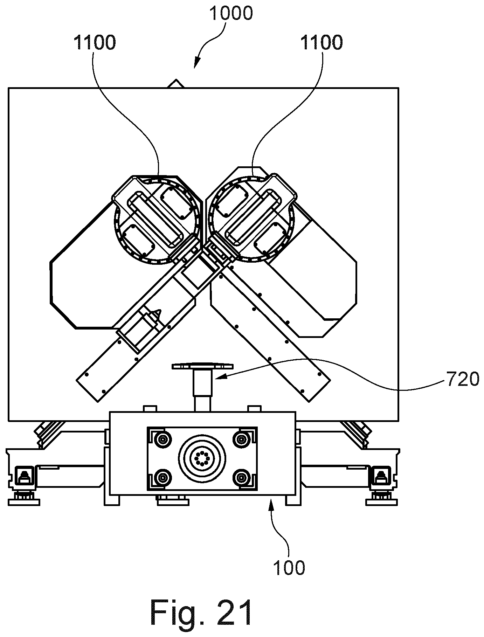

Fig. 21 zeigt nun schematisch eine weitere Ausführungsform der Transporteinrichtung 100 ohne aufgenommene Kühlmittelaustausch-, Kühlmittelzuführ- oder Kühlmittelabsaugmoduleinheit, sondern exemplarisch mit einem Werkzeugwechsler 720.

Dabei kann beispielsweise die Transporteinrichtung 100 mit einem in dem Werkzeugwechsler 720 aufgenommenen Werkzeug an die Werkzeugmaschine 1000, insbesondere an die Arbeitsspindel 1100 heranfahren, und dort den Werkzeugwechsel durch eine Drehbewegung des Werkzeugwechslers 720 durchführen.

Weiterhin kann anstelle des Werkzeugwechslers 720 auch eine Wechsler-Speicher-Kombination 720 durch die Transporteinrichtung 100 zu der Werkzeugmaschine 1000 transportiert werden. Der Vorteil besteht darin, dass diese Wechsler-Speicher-Kombination 720 eine deutlich größere Kapazität zur Aufnahme von Werkzeugen hat als ein einfacher Werkzeugwechsler wie beispielsweise ein Gabelgreifer oder ein Hakengreifer.

Ist nun die Wechsler-Speicher-Kombination 720 vor der Werkzeugmaschine 1000 bzw. der Arbeitsspindel 1100 positioniert, so kann die Arbeitsspindel 1100 das gewünschte Werkzeug aus der Wechsler-Speicher-Kombination 720 (beispielweise ein Kettenmagazin oder Radmagazin mit entsprechenden Antrieben) herausnehmen, wobei die Wechsler-Speicher-Kombination 720 beispielsweise durch eine Zustelldrehung des gewünschten Werkzeugs zur Arbeitsspindel 1100 den Werkzeugwechsel beschleunigen bzw. vereinfachen kann.

Jedoch kann auch die Transporteinrichtung 100 lediglich über einen Werkzeugspeicher 720 (beispielsweise als Kettenmagazin, Radmagazin oder Regalmagazin etc.) verfügen, der zur Werkzeugmaschine 1000 transportiert wird und aus diesem die Arbeitsspindel 1100 der Werkzeugmaschine 1000 selbstständig das gewünschte Werkzeug entnehmen kann.

Ferner können aber auch die oben genannten Möglichkeiten miteinander kombiniert werden, so dass beispielsweise eine Transporteinrichtung 100 mit einem Werkzeugspeicher 720 zusammen mit einer Transporteinrichtung 100 mit einem Werkzeugwechsler 720 vor der Werkzeugmaschine 1000 positioniert wird und den Werkzeugwechsel an der Werkzeugmaschine 1000 im Zusammenspiel miteinander durchführen.

Die oben genannten Möglichkeiten sind des Weiteren nicht nur auf Werkzeuge beschränkt, da beispielsweise statt der Werkzeuge auch Werkstücke bzw. Werkzeuge und Werkstücke gleichzeitig gespeichert und/oder gewechselt werden können.

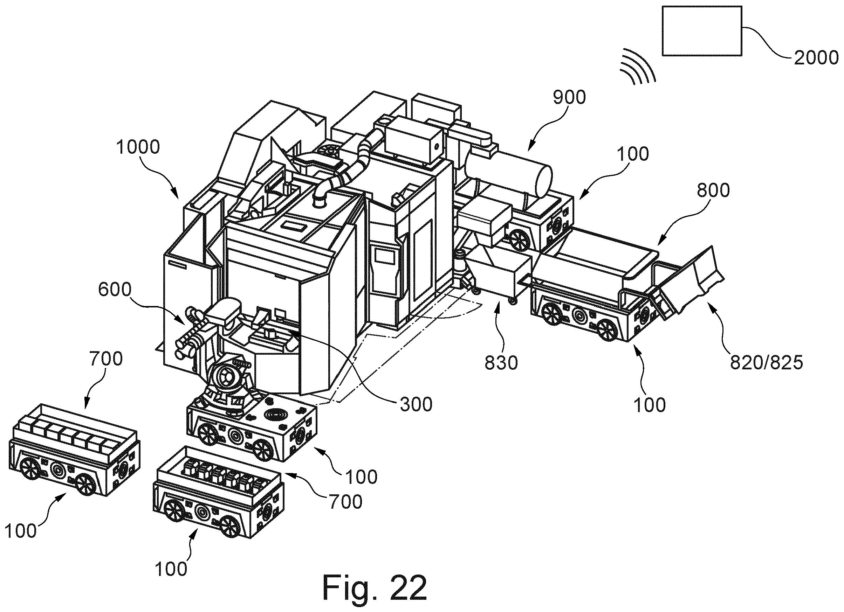

Fig. 22 zeigt schematisch eine Vielzahl an Transporteinrichtungen 100 mit unterschiedlichen Aufgaben innerhalb einer Produktionskette, allerdings jeweils ohne aufgenommene Kühlmittelaustausch-, Kühlmittelzuführ- oder Kühlmittelabsaugmoduleinheit.

Das fahrerlose Transportsystem (FTS) verfügt vorzugsweise über eine in der Leitrechnersteuerung 2000 integrierte, übergeordnete Leitrechnersoftware, welche die einzelnen Aufträge steuert und überwacht. Die Leitrechnersoftware ist vorzugsweise in der Lage n+1 Transporteinrichtungen 100 gleichzeitig zu steuern und zu überwachen.

Die Kommunikation zwischen den Transporteinrichtungen 100 und der Leitrechnersteuerung 2000 funktioniert vorzugsweise drahtlos über z. B. WLAN oder Funk.

Die Transporteinrichtung 100 verfügt vorzugsweise um eine optische Informationsquelle wie z.B. eine Statusleuchte (hier nicht gezeigt), welche als grafische Darstellung des Zustandes der Transporteinrichtung 100 dient. Hierbei wird vorzugsweise die Ampellogik verwendet. Grün= Status in Ordnung, Gelb: Störung, Rot: Problem. Alternativ kann diese Leuchte durch weitere optische Signale wie blinken auch weitere Zustände anzeigen.

Sind mehrere Transporteinrichtungen 100 im Einsatz, können diese vorzugsweise die Handhabungseinrichtungen (wie Palettenwechsler 200, Roboter 600, Module 700 (wie Materialpaletten, Gitterboxen, etc.), Modul 800 zum Auffangen der Späne, Modul 900 zum Auffangen bzw. Absaugen des gebrauchten Kühl-Schmierstoffes aus der Werkzeugmaschine 1000) miteinander teilen. Dadurch wird eine noch flexiblere Automationslösung gewährleistet.

Vorzugsweise platziert die Transporteinrichtung 100 eine nicht mehr benötigte Handhabungseinrichtung an einem bekannten Platz. Dort kann eine weitere Transporteinrichtung 100 diese Handhabungseinrichtung anfahren, aufnehmen und nutzen.

Vorzugsweise verfügen die Transporteinrichtungen 100 über eine Kommunikationsmöglichkeit mit anderen Transporteinrichtungen 100. Dadurch kann z. B. auf Störquellen wie belegte Verfahrwege, auf gemeinsam genutzte Handhabungseinrichtungen und deren Standort und auf beliebige andere Informationen hingewiesen und reagiert werden. Optional übernimmt diese Aufgabe die Leitrechnersteuerung 2000.

Vorzugsweise verfügt die Transporteinrichtung 100 über eine Schnittstelle, welche die Kommunikation, Energieübertragung zu Werkzeugmaschinen 1000 oder Stationen zulässt. Vorzugsweise sind diese Schnittstellen berührungslos, können aber auch alternativ über Stecker oder Nahfeldkommunikation bewerkstelligt werden.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keiner Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Insbesondere sein an dieser Stelle darauf hingewiesen, dass die verschiedensten Ausgestaltungen und Funktionen, die die Transporteinrichtung 100 erfüllen kann, miteinander kombiniert werden können, um ein überaus flexibles Maschinenkonzept bereitzustellen, um das Bearbeiten von Werkstücken 1 noch flexibler und effizienter zu gestalten. Insbesondere können hierbei die oben genannten Konzepte der modularen Werkzeugmaschine um die verschiedenen, weiter oben genannten Zusatzfunktionen der Transporteinrichtung 100 sowie um das Bereitstellen und Austauschen von Werkstücken 1 und/oder Paletten 300 ergänzt werden.

Es können aber auch bereits bestehende Werkzeugmaschinen 1000 einfach um die Zusatzfunktionen und/oder um das Werkstück- und Paletten-Handling ergänzt werden. Weiterhin können aber auch modulare Werkzeugmaschinen mit feststehenden Werkzeugmaschinen kombiniert werden, um die Produktion/Bearbeitung von Werkstücken 1 flexibler zu gestalten.

Weiterhin kann beispielsweise eine Transorteinrichtung 100 sowohl Aufgaben aus dem Bereich der modularen Werkzeugmaschine, als auch Zusatzfunktionen zur gleichen Zeit übernehmen. Eine Transporteinrichtung ist dabei nicht auf nur einen Bereich beschränkt, sondern kann gleichzeitig verschiedenste Aufgaben aus verschiedenen Bereichen übernehmen.

Die oben genannten Möglichkeiten sind daher nicht als einschränkend aufzufassen und können ausdrücklich in beliebiger Weise im Rahmen des durch die Ansprüche definierten Schutzumfanges miteinander kombiniert werden.

### LISTE DER BEZUGSZEICHEN

- **1**: Bauteil / Werkstück
- **10**: Fahrgestell / Plattform
- **20**: Rad
- **30**: Energiespeicher
- **35**: interne Steuerung
- **40**: Aufnahmevorrichtung
- **41**: konenförmige Abschnitte der Aufnahmevorrichtung
- **42**: Schnittstelle der Aufnahmevorrichtung
- **43**: Befestigungsmittel und Anschlüsse
- **44**: Vertiefung
- **45**: Druckstück
- **46**: Zentriervorrichtung
- **47**: Antrieb zum Verfahren der Vertiefungen
- **48**: Bolzen
- **50**: Hubzylinder (für Rad bzw. Fahrwerk)
- **60**: Fahrwerk
- **100**: Transporteinrichtung
- **101**: Magazin
- **102**: Werkzeug
- **103**: Gegenstück (zum Prisma)
- **105**: Kupplung (zwischen zwei Transporteinrichtungen)
- **200**: Palettenwechsler
- **300**: Palette
- **301**: Ausrichtelement der Palette
- **350**: Palettenhalter
- **355**: konische Vertiefungen
- **357**: Schnittstelle des Palettenhalters
- **358**: Schnittstelle der Werkzeugmaschine
- **400**: Förderband
- **420**: Absaugung
- **470**: Stangenlader
- **500**: Ablageplatz
- **600**: Roboter / Industrieroboter
- **601**: Verschlussblech
- **610**: Vermessungseinheit
- **620**: Mess- und Prüfmittel
- **630**: Aufsatz zur Nachbearbeitung von Bauteilen
- **640**: Einheit zum Schärfen und Abrichten von Werkzeugen
- **650**: Schutzumbauung
- **700**: Modul (Gitterboxen, Materialpaletten, weitere Materialträger, Maschinenpalette, Modul von Pufferplätze für Werkzeuge)
- **720**: Werkzeugwechsler, Wechsler-Speicher-Kombination, Werkzeugspeicher
- **750**: Roboterzubehör (Wechselgreifer, Entgrater, Aufbewahrungsbox für Werkzeuge)
- **770**: Auftragvorrichtung
- **775**: Pulver-/Medientank
- **777**: Zubringung/Absaugung von Pulver/Medien
- **800**: Modul zum Auffangen der Späne
- **810**: Kippmechanismus
- **820**: Hebemechanismus
- **825**: Spänebehälter
- **830**: Behälterwagen
- **900**: Modul zum Auffangen bzw. Absaugen des gebrauchten Kühl-Schmierstoffes aus der Werkzeugmaschine
- **910**: Absaugvorrichtung
- **920**: Tank
- **930**: Filter (für Späne im Kühl-Schmierstoff)
- **1000**: Werkzeugmaschine
- **1010**: Prisma
- **1020**: Standard-Absaugung
- **1030**: Umhausung
- **1040**: Palettenhalteraufnahme
- **1044**: Palettenkonus
- **1045**: Zentriervorrichtung zur Ausrichtung der Palette
- **1051**: konische Aufnahme
- **1100**: Arbeitsspindel
- **1400**: Spänesammler/Spänewagen
- **1500**: Werkzeugrevolver
- **1600**: Gantry-Lader
- **1610**: Greifer (Gantry-Lader)
- **2000**: Leitrechnersteuerung

## Patentansprüche

1. Transporteinrichtung (100) umfassend eine oder mehrere Moduleinheiten sowie ein fahrerloses Transportfahrzeug zum Aufnehmen und zum Transportieren der einen oder mehreren Moduleinheiten zu einer auf einer Grundfläche aufgestellten Werkzeugmaschine (1000),
wobei die eine oder mehreren aufgenommenen Moduleinheiten jeweils eine mit der Werkzeugmaschine (1000) einsetzbare Werkzeugmaschinenzubehöreinrichtung aufweisen,
und wobei das fahrerlose Transportfahrzeug zum Positionieren der einen oder mehreren aufgenommenen Moduleinheiten relativ zu der Werkzeugmaschine (1000) auf der Grundfläche verfahrbar ist, insbesondere innerhalb eines Bereiches vor und/oder neben der Werkzeugmaschine (1000) und/oder vor und/oder neben einem Arbeitsraum der Werkzeugmaschine (1000), **dadurch gekennzeichnet, dass**
das fahrerlose Transportfahrzeug dazu eingerichtet ist, unabhängig von einer Art Schienensystem oder dergleichen zur Führung des fahrerlosen Transportfahrzeugs frei auf der Grundfläche verfahren zu werden, und
die Transporteinrichtung (100) als aufgenommene Moduleinheit eine Kühlmittelzuführmoduleinheit mit Kühlmittelzuführeinrichtung oder eine Kühlmitteltauschmoduleinheit mit Kühlmittelaustauscheinrichtung oder eine Kühlmittelabsaugmoduleinheit (900) mit Absaugeinrichtung (910) umfasst,
wobei die Kühlmittelzuführeinrichtung zum Zuführen von Kühlmittel an der Werkzeugmaschine (1000) eingerichtet ist,
die Kühlmittelaustauscheinrichtung zum Austausch von Kühlmittel an der Werkzeugmaschine (1000) eingerichtet ist und
die Absaugeinrichtung (910) zum Absaugen von gebrauchtem Kühlmittel aus der Werkzeugmaschine (1000) eingerichtet ist.

2. Transporteinrichtung (100) gemäß Anspruch 1, **dadurch gekennzeichnet, dass**
die Transporteinrichtung (100) mittels Verfahren auf der Grundfläche dazu eingerichtet ist, die eine oder mehreren Moduleinheiten innerhalb eines Bereiches vor und/oder neben dem Arbeitsraum der Werkzeugmaschine (1000) entlang den Bereich aufspannenden Raumrichtungen zu positionieren.

3. Transporteinrichtung (100) gemäß Anspruch 1 oder 2, **dadurch gekennzeichnet, dass** das fahrerlose Transportfahrzeug einen Antrieb zum Verfahren des fahrerlosen Transportfahrzeugs, und die Transporteinrichtung (100) eine Steuereinheit (35) zum Steuern der Transporteinrichtung (100) umfasst.

4. Transporteinrichtung (100) gemäß einem der vorstehenden Ansprüche, **dadurch gekennzeichnet, dass**
die Transporteinrichtung (100) dazu eingerichtet ist, zu einer zur Bereitstellung von Moduleinheiten und/oder Lagerung von Moduleinheiten eingerichteten Modulladestation zu verfahren, insbesondere zum Ausrüsten des Transportfahrzeugs der Transporteinrichtung (100) mit einer oder mehreren Moduleinheiten an der Modulladestation und/oder zum Austausch einer oder mehrerer Moduleinheiten der Transporteinrichtung (100) an der Modulladestation.

5. Transporteinrichtung (100) gemäß einem der vorherigen Ansprüche, **dadurch gekennzeichnet, dass** weitere Moduleinheiten der ein oder mehreren aufgenommenen Moduleinheiten der Transporteinrichtung (100) jeweils als Werkzeugmaschinenzubehöreinrichtung umfassen:
- eine Handhabungseinrichtung (350), die zur Handhabung einer Palette (300) und/oder eines Werkstücks an der Werkzeugmaschine (1000) eingerichtet ist, oder
- einen Industrieroboter (600), insbesondere zur Handhabung von Werkzeugen, Werkstücken und/oder Werkstückpaletten, oder
- eine Werkzeugwechselvorrichtung (720) zum Ausführen eines Werkzeugwechsels an der Werkzeugmaschine (1000), oder
- eine Werkzeugspeichereinrichtung bzw. ein Werkzeugmagazin zum Bereitstellen von Werkzeugen an der Werkzeugmaschine (1000), oder
- eine Werkzeugspeichereinrichtung mit Werkzeugwechselvorrichtung (720) zum Bereitstellen von Werkzeugen an der Werkzeugmaschine (1000) und zum Ausführen eines Werkzeugwechsels an der Werkzeugmaschine (1000), oder
- eine Späneauffangeinrichtung (825) zum Auffangen von Spänen an der Werkzeugmaschine (1000) bzw. in dem Arbeitsraum der Werkzeugmaschine (1000), oder
- eine Spänefödereinrichtung zum Abführen von Spänen von der Werkzeugmaschine (1000) bzw. aus dem Arbeitsraum der Werkzeugmaschine (1000), oder
- eine Werkstück-Zuladevorrichtung zum Laden von Werkstücken an der Werkzeugmaschine (1000), insbesondere ein Stangenlader (470) zum Einsatz an einer als Drehmaschine ausgebildeten Werkzeugmaschine (1000), oder
- eine Werkstückvermessungseinrichtung (610) zum Vermessen eines Werkstücks an der Werkzeugmaschine (1000), insbesondere mit einer optischen, elektromagnetischen und/oder taktilen Messvorrichtung, oder
- eine Werkstückentgratvorrichtung (750) zum Entgraten eines Werkstücks an der Werkzeugmaschine (1000), oder
- eine Werkzeugeinrichtvorrichtung zum Einrichten von Werkzeugen an der Werkzeugmaschine (1000), oder
- eine Werkzeugabrichtvorrichtung (640) zum Abrichten von Werkzeugen an der Werkzeugmaschine (1000), insbesondere zum Abrichten von Schleifwerkzeugen an der Werkzeugmaschine (1000), oder
- eine Vorrichtung zum Werkzeugschärfen von Werkzeugen an der Werkzeugmaschine (1000), oder
- eine Absaugvorrichtung (420) zum Absaugen im Arbeitsraum der Werkzeugmaschine (1000), oder
- eine Werkstückaufnahme zum Aufnehmen eines Werkstücks, oder
- eine Fördereinrichtung zum Fördern von Werkstücken, insbesondere umfassend ein oder mehrere Förderbänder (400) bzw. Förderbandabschnitte, oder
- eine Ersatzteilaustauscheinrichtung zum Austausch von Zubehörteilen bzw. Ersatzteilen an der Werkzeugmaschine (1000).

6. Transporteinrichtung (100) gemäß einem der vorstehenden Ansprüche, **dadurch gekennzeichnet, dass**
weitere Moduleinheiten der einen oder mehreren aufgenommenen Moduleinheiten
- eine Handhabungsmoduleinheit mit einer Handhabungseinrichtung, die zur Handhabung einer Palette (300) und/oder eines Werkstücks an der Werkzeugmaschine (1000) eingerichtet ist, oder
- eine Robotermoduleinheit mit einem Industrieroboter (600), insbesondere zur Handhabung von Werkzeugen, Werkstücken und/oder Werkstückpaletten, oder
- eine Werkzeugwechselmoduleinheit mit einer Werkzeugwechselvorrichtung (720) zum Ausführen eines Werkzeugwechsels an der Werkzeugmaschine (1000), oder
- eine Werkzeugspeichermoduleinheit mit einer Werkzeugspeichereinrichtung bzw. ein Werkzeugmagazin zum Bereitstellen von Werkzeugen an der Werkzeugmaschine (1000), oder
- eine Werkzeugspeicher- und Werkzeugwechselmoduleinheit mit einer Werkzeugspeichereinrichtung mit Werkzeugwechselvorrichtung (720) zum Bereitstellen von Werkzeugen an der Werkzeugmaschine (1000) und zum Ausführen eines Werkzeugwechsels an der Werkzeugmaschine (1000), oder
- eine Späneauffangmoduleinheit (800) mit einer Späneauffangeinrichtung (825) zum Auffangen von Spänen an der Werkzeugmaschine (1000) bzw. in dem Arbeitsraum der Werkzeugmaschine (1000), oder
- eine Spänefördermoduleinheit mit einer Spänefödereinrichtung zum Abführen von Spänen von der Werkzeugmaschine (1000) bzw. aus dem Arbeitsraum der Werkzeugmaschine (1000), oder
- eine Werkstückzulademoduleinheit mit einer Werkstück-Zuladevorrichtung zum Laden von Werkstücken an der Werkzeugmaschine (1000), insbesondere ein Stangenlader (470) zum Einsatz an einer als Drehmaschine ausgebildeten Werkzeugmaschine (1000), oder
- eine Werkstückvermessmoduleinheit mit einer Werkstückvermessungseinrichtung (610) zum Vermessen eines Werkstücks an der Werkzeugmaschine (1000), insbesondere mit einer optischen, elektromagnetischen und/oder taktilen Messvorrichtung, oder
- eine Werkstückentgratmoduleinheit mit einer Werkstückentgratvorrichtung (750) zum Entgraten eines Werkstücks an der Werkzeugmaschine (1000), oder
- eine Werkzeugeinrichtmoduleinheit mit einer Werkzeugeinrichtvorrichtung zum Einrichten von Werkzeugen an der Werkzeugmaschine (1000), oder
- eine Werkzeugabrichtmoduleinheit mit einer Werkzeugabrichtvorrichtung (640) zum Abrichten von Werkzeugen an der Werkzeugmaschine (1000), insbesondere zum Abrichten von Schleifwerkzeugen an der Werkzeugmaschine (1000), oder
- eine Werkzeugschärfmoduleinheit (640) mit einer Vorrichtung zum Werkzeugschärfen von Werkzeugen an der Werkzeugmaschine (1000), oder
- eine Absaugmoduleinheit mit einer Absaugvorrichtung (420) zum Absaugen im Arbeitsraum der Werkzeugmaschine (1000), oder
- eine Werkstückaufnahmemoduleinheit mit einer Werkstückaufnahme zum Aufnehmen eines Werkstücks, oder
- eine Fördermoduleinheit mit einer Fördereinrichtung zum Fördern von Werkstücken, insbesondere umfassend ein oder mehrere Förderbänder (400) bzw. Förderbandabschnitte, oder
- eine Ersatzteilaustauschmoduleinheit mit einer Ersatzteilaustauscheinrichtung zum Austausch von Zubehörteilen bzw. Ersatzteilen an der Werkzeugmaschine (1000) sind.

7. System, **gekennzeichnet durch**
- eine oder mehrere Transporteinrichtungen (100) gemäß einem der vorstehenden Ansprüche, und
- eine zentrale Steuereinrichtung die dazu eingerichtet ist, mit der einen oder den mehreren Transporteinrichtungen (100) in Verbindung zu stehen, insbesondere mittels einer drahtlosen Kommunikationsverbindung, und die mehreren Transporteinrichtungen (100) zu steuern, insbesondere per automatischer Fernsteuerung.

8. System gemäß Anspruch 7, **gekennzeichnet durch**
einer zur Bereitstellung von Moduleinheiten und/oder Lagerung von Moduleinheiten eingerichteten Modulladestation, insbesondere zum Ausrüsten der fahrerlosen Transportfahrzeuge der einen oder mehreren Transporteinrichtungen (100) mit einer oder mehreren Moduleinheiten an der Modulladestation und/oder zum Austausch einer oder mehrerer Moduleinheiten der einen oder mehreren Transporteinrichtung (100) an der Modulladestation.

## Claims

1. A transport device (100) comprising one or more modular units as well as a driverless transport vehicle for receiving and transporting the one or more modular units to a machine tool (1000) set up on a base surface,
wherein the one or more received modular units each include a machine tool accessory device usable with said machine tool (1000),
and wherein said driverless transport vehicle is movable on the base surface for positioning the one or more handling devices relative to said machine tool (1000), in particular within a region in front of and/or next to said machine tool (1000) and/or in front of and/or next to a work space of said machine tool (1000),
**characterized in that**
said driverless transport vehicle is configured to be moved freely on the base surface independently of a type of rail system or the like for guiding said driverless transport vehicle, and
said transport device comprises, as a received modular unit, a coolant supply module unit with a coolant supply device or a coolant exchange module unit with a coolant exchange device or a coolant suction module unit (900) with a suction device (910),
wherein said coolant supply device is configured to supply coolant to said machine tool (1000),
said coolant exchange device is configured to exchange coolant at said machine tool (1000), and
said suction device (910) is configured to suction used coolant from said machine tool (1000).

2. The transport device (100) according to claim 1, **characterized in that**
said transport device is configured to position, by means of moving on the base surface, the one or more module units within a region in front of and/or next to the work space of said machine tool (100) along the spatial directions spanning the region.

3. The transport device (100) according to claim 1 or 2, **characterized in that**
said driverless transport vehicle includes a drive for moving said driverless transport vehicle, and said transport device (100) includes a control unit (35) for controlling said transport device (100).

4. The transport device (100) according to one of the preceding claims, **characterized in that**
said transport device (100) is configured to move to a module loading station configured to provide module units and/or storage of module units, in particular to equip the transport vehicle of said transport device (100) with one or more module units at the module loading station and/or to exchange one or more module units of said transport device (100) at the module loading station.

5. The transport device (100) according to one of the preceding claims, **characterized in that** further modular units of the one or more received modular units of said transport device (100) each comprise as a machine tool accessory device:
- a handling device (350) configured to handle a pallet (300) and/or a workpiece at said machine tool (1000), or
- an industrial robot (600), in particular for handling tools, workpieces and/or workpiece pallets, or
- a tool changing device (720) for carrying out a tool change at said machine tool (1000), or
- a tool storage device or a tool magazine for providing tools at said machine tool (1000), or
- a tool storage device with a tool changing device (720) for providing tools at said machine tool (1000) and for carrying out a tool change at said machine tool (1000), or
- a chip collection device (825) for collecting chips at said machine tool (1000) or in the work space of said machine tool (1000), or
- a chip conveyor device for removing chips from said machine tool (1000) or from the work space of said machine tool (1000), or
- a workpiece loading device for loading workpieces at said machine tool (1000), in particular a bar loader (470) for use on a machine tool (1000) configured as a turning machine, or
- a workpiece measuring device (610) for measuring a workpiece at said machine tool (1000), in particular with an optical, electromagnetic and/or tactile measuring device, or
- a workpiece deburring device (750) for deburring a workpiece at said machine tool (1000), or
- a tool setup device for setting up tools at said machine tool (1000), or
- a tool dressing device (640) for dressing tools at said machine tool (1000), in particular for dressing grinding tools at said machine tool (1000), or
- a tool sharpening device for sharpening tools at said machine tool (1000), or
- a suction device (420) for suction in the work space of said machine tool (1000), or
- a workpiece receptacle for receiving a workpiece, or
- a conveyor device for conveying workpieces, in particular comprising one or more conveyor belts (400) or conveyor belt portions, or
- a spare parts exchange device for exchanging accessory parts or spare parts at said machine tool (1000).

6. The transport device (100) according to one of the preceding claims, **characterized in that**
further modular units of the one or more received modular units are
- a handling module unit with a handling device configured to handle a pallet (300) and/or a workpiece at said machine tool (1000), or
- a robot module unit with an industrial robot (600), in particular for handling tools, workpieces and/or workpiece pallets, or
- a tool changing module unit with a tool changing device (720) for carrying out a tool change on said machine tool (1000), or
- a tool storage module unit with a tool storage device or a tool magazine for providing tools at said machine tool (1000), or
- a tool storage and tool changing module unit with a tool storage device with a tool changing device (720) for providing tools at said machine tool (1000) and for carrying out a tool change at said machine tool (1000), or
- a chip collection module unit (800) with a chip collection device (825) for collecting chips at said machine tool (1000) or in the work space of said machine tool (1000), or
- a chip conveyor module unit with a chip conveyor device for removing chips from said machine tool (1000) or from the work space of said machine tool (1000), or
- a workpiece loading module unit with a workpiece loading device for loading workpieces at said machine tool (1000), in particular a bar loader (470) for use on a machine tool (1000) configured as a turning machine, or
- a workpiece measuring module unit with a workpiece measuring device (610) for measuring a workpiece at said machine tool (1000), in particular with an optical, electromagnetic and/or tactile measuring device, or
- a workpiece deburring module unit with a workpiece deburring device (750) for deburring a workpiece at said machine tool (1000), or
- a tool setup module unit with a tool setup device for setting up tools at said machine tool (1000), or
- a tool dressing module unit with a tool dressing device (640) for dressing tools at said machine tool (1000), in particular for dressing grinding tools at said machine tool (1000), or
- a tool sharpening module unit (640) with a tool sharpening device for sharpening tools at said machine tool (1000), or
- a suction module unit with a suction device (420) for suction in the work space of said machine tool (1000), or
- a workpiece receptacle module unit with a workpiece receptacle for receiving a workpiece, or
- a conveyor module unit with a conveyor device for conveying workpieces, in particular comprising one or more conveyor belts (400) or conveyor belt portions, or
- a spare part exchange module unit with a spare parts exchange device for exchanging accessory parts or spare parts at said machine tool (1000).

7. A system, **characterized by**
- one or more transport devices (100) according to one of the preceding claims, and
- a central control device configured to be connected to the one or more transport devices (100), in particular by means of a wireless communication link, and t to control he plurality of transport devices (100), in particular by automatic remote control.

8. The system according to claim 7, **characterized by**
a module loading station configured to provide module units and/or storage of module units, in particular to equip the one or more transport devices (100) with one or more module units at the module loading station and/or to exchange one or more module units of the one or more transport devices (100) at the module loading station.

## Revendications

1. Système de transport (100) comprenant une ou plusieurs unités modulaires ainsi qu'un véhicule de transport sans conducteur pour la réception et pour le transport des une ou plusieurs unités modulaires vers une machine-outil (1000) posée sur une surface de base,
dans lequel les une ou plusieurs unités modulaires reçues présentent respectivement un système d'accessoire de machine-outil pouvant être inséré avec la machine-outil (1000),
et dans lequel le véhicule de transport sans conducteur est déplaçable sur la surface de base, en particulier à l'intérieur d'une zone devant et/ou à côté de la machine-outil (1000) et/ou devant et/ou à côté d'une chambre de travail de la machine-outil (1000) pour le positionnement des une ou plusieurs unités modulaires reçues par rapport à la machine-outil (1000),
**caractérisé en ce que**
le véhicule de transport sans conducteur est conçu pour être déplacé librement sur la surface de base indépendamment d'un type de système de rail ou similaire pour le guidage du véhicule de transport sans conducteur, et
le système de transport (100) comprend comme unité modulaire reçue une unité modulaire d'amenée de réfrigérant avec un système d'amenée de réfrigérant ou une unité modulaire d'échange de réfrigérant avec un système d'échange de réfrigérant ou une unité modulaire d'aspiration de réfrigérant (900) avec un système d'aspiration (910),
dans lequel le système d'amenée de réfrigérant est conçu pour amener un réfrigérant à la machine-outil (1000),
le système d'échange de réfrigérant est conçu pour l'échange de réfrigérant sur la machine-outil (1000) et
le système d'aspiration (910) est conçu pour l'aspiration de réfrigérant usagé de la machine-outil (1000).

2. Système de transport (100) selon la revendication 1, **caractérisé en ce que**
le système de transport (100) est conçu au moyen d'un déplacement sur la surface de base pour positionner les une ou plusieurs unités modulaires à l'intérieur d'une zone devant et/ou à côté de la chambre de travail de la machine-outil (1000) le long de directions spatiales couvrant la zone.

3. Système de transport (100) selon la revendication 1 ou 2, **caractérisé en ce que** le véhicule de transport sans conducteur comprend un entraînement pour le déplacement du véhicule de transport sans conducteur, et le système de transport (100) une unité de commande (35) pour la commande du système de transport (100).

4. Système de transport (100) selon l'une quelconque des revendications précédentes, **caractérisé en ce que**
le système de transport (100) est conçu pour se déplacer vers une station de chargement de module conçue pour la fourniture d'unités modulaires et/ou le montage d'unités modulaires, en particulier pour l'équipement du véhicule de transport du système de transport (100) avec une ou plusieurs unités modulaires sur la station de chargement de module et/ou pour l'échange d'une ou plusieurs unités modulaires du système de transport (100) sur la station de chargement de module.

5. Système de transport (100) selon l'une quelconque des revendications précédentes, **caractérisé en ce que** d'autres unités modulaires des une ou plusieurs unités modulaires reçues du système de transport (100) comprennent respectivement comme système d'accessoire de machine-outil :
- un système de manipulation (350), qui est conçu pour la manipulation d'une palette (300) et/ou d'une pièce sur la machine-outil (1000), ou
- un robot industriel (600), en particulier pour la manipulation d'outils, de pièces et/ou de palettes de pièces, ou
- un dispositif de changement d'outil (720) pour la mise en oeuvre d'un changement d'outil sur la machine-outil (1000), ou
- un système de stockage d'outil ou un magasin d'outil pour la fourniture d'outils sur la machine-outil (1000), ou
- un système de stockage d'outil avec un dispositif de changement d'outil (720) pour la fourniture d'outils sur la machine-outil (1000) et pour la mise en oeuvre d'un changement d'outil sur la machine-outil (1000), ou
- un système de collecte de copeaux (825) pour la collecte de copeaux sur la machine-outil (1000) ou dans la chambre de travail de la machine-outil (1000), ou
- un système de convoyage de copeaux pour l'évacuation de copeaux de la machine-outil (1000) ou de la chambre de travail de la machine-outil (1000), ou
- un dispositif de chargement de pièce pour le chargement de pièces sur la machine-outil (1000), en particulier un ravitailleur (470) à insérer sur une machine-outil (1000) réalisée sous la forme d'un tour, ou
- un système de mesure de pièce (610) pour la mesure d'une pièce sur la machine-outil (1000), en particulier avec un dispositif de mesure optique, électromagnétique et/ou tactile, ou
- un dispositif d'ébavurage de pièce (750) pour l'ébavurage d'une pièce sur la machine-outil (1000), ou
- un dispositif d'installation d'outil pour l'installation d'outils sur la machine-outil (1000), ou
- un dispositif de dressage d'outil (640) pour le dressage d'outils sur la machine-outil (1000), en particulier pour le dressage d'outils de rectification sur la machine-outil (1000), ou
- un dispositif pour l'affûtage d'outil d'outils sur la machine-outil (1000),
ou
- un dispositif d'aspiration (420) pour l'aspiration dans la chambre de travail de la machine-outil (1000), ou
- un logement de pièce pour la réception d'une pièce, ou
- un système de convoyage pour le convoyage de pièces, comprenant en particulier une ou plusieurs bandes de convoyage (400) ou parties de bande de convoyage, ou
- un système d'échange de pièce de rechange pour l'échange d'accessoires ou de pièces de rechange sur la machine-outil (1000).

6. Système de transport (100) selon l'une quelconque des revendications précédentes, **caractérisé en ce que**
d'autres unités modulaires des une ou plusieurs unités modulaires reçues sont
- une unité modulaire de manipulation avec un système de manipulation, qui est conçu pour la manipulation d'une palette (300) et/ou d'une pièce sur la machine-outil (1000), ou
- une unité modulaire de robot avec un robot industriel (600), en particulier pour la manipulation d'outils, de pièces et/ou de palettes de pièces, ou
- une unité modulaire de changement d'outil avec un dispositif de changement d'outil (720) pour la mise en oeuvre d'un changement d'outil sur la machine-outil (1000), ou
- une unité modulaire de stockage d'outil avec un système de stockage d'outil ou un magasin d'outil pour la fourniture d'outils sur la machine-outil (1000), ou
- une unité modulaire de stockage d'outil et de changement d'outil avec un système de stockage d'outil avec un dispositif de changement d'outil (720) pour la fourniture d'outils sur la machine-outil (1000) et pour la mise en oeuvre d'un changement d'outil sur la machine-outil (1000), ou
- une unité modulaire de collecte de copeaux (800) avec un système de collecte de copeaux (825) pour la collecte de copeaux sur la machine-outil (1000) ou dans la chambre de travail de la machine-outil (1000), ou
- une unité modulaire de convoyage de copeaux avec un système de convoyage de copeaux pour l'évacuation de copeaux de la machine-outil (1000) ou à partir de la chambre de travail de la machine-outil (1000), ou
- une unité modulaire de chargement de pièce avec un dispositif de chargement de pièce pour le chargement de pièces sur la machine-outil (1000), en particulier un ravitailleur (470) à insérer sur une machine-outil (1000) réalisée sous la forme d'un tour, ou
- une unité modulaire de mesure de pièce avec un système de mesure de pièce (610) pour la mesure d'une pièce sur la machine-outil (1000), en particulier avec un dispositif de mesure optique, électromagnétique et/ou tactile, ou
- une unité modulaire d'ébavurage de pièce avec un dispositif d'ébavurage de pièce (750) pour l'ébavurage d'une pièce sur la machine-outil (1000), ou
- une unité modulaire d'installation d'outil avec un dispositif d'installation d'outil pour l'installation d'outils sur la machine-outil (1000), ou
- une unité modulaire de dressage d'outil avec un dispositif de dressage d'outil (640) pour le dressage d'outils sur la machine-outil (1000), en particulier pour le dressage d'outils de rectification sur la machine-outil (1000), ou
- une unité modulaire d'affûtage d'outil (640) avec un dispositif pour l'affûtage d'outil d'outils sur la machine-outil (1000), ou
- une unité modulaire d'aspiration avec un dispositif d'aspiration (420) pour l'aspiration dans la chambre de travail de la machine-outil (1000), ou
- une unité modulaire de réception de pièce avec un logement de pièce pour la réception d'une pièce, ou
- une unité modulaire de convoyage avec un système de convoyage pour le convoyage de pièces, comprenant en particulier une ou plusieurs bandes de convoyage (400) ou parties de bande de convoyage, ou
- une unité modulaire d'échange de pièce de rechange avec un système d'échange de pièce de rechange pour l'échange d'accessoires ou de pièces de rechange sur la machine-outil (1000).

7. Système, **caractérisé par**
- un ou plusieurs systèmes de transport (100) selon l'une quelconque des revendications précédentes, et
- un système de commande central qui est conçu pour être en liaison avec l'un des ou les plusieurs systèmes de transport (100), en particulier au moyen d'une liaison de communication sans fil, et pour commander les plusieurs systèmes de transport (100), en particulier par télécommande automatique.

8. Système selon la revendication 7, **caractérisé par**
une station de chargement de module conçue pour la fourniture d'unités modulaires et/ou le montage d'unités modulaires, en particulier pour l'équipement des véhicules de transport sans conducteur des un ou plusieurs systèmes de transport (100) avec une ou plusieurs unités modulaires sur la station de chargement de module et/ou pour l'échange d'une ou plusieurs unités modulaires des un ou plusieurs systèmes de transport (100) sur la station de chargement de module.
